# EUROPÄISCHE PATENTSCHRIFT

(11) **EP 3 152 874 B1**
(45) Veröffentlichungstag und Bekanntmachung des Hinweises auf die Patenterteilung: **14.04.2021**
(21) Anmeldenummer: 15731522.7
(22) Anmeldetag: 01.06.2015
(51) Int. Cl.: H04L 12/717, H04L 29/06, H04L 12/721, H04L 9/32

(54) **ROUTING-VERFAHREN ZUR WEITERLEITUNG VON TASK-ANWEISUNGEN ZWISCHEN COMPUTERSYSTEMEN, COMPUTERNETZ-INFRASTRUKTUR SOWIE COMPUTERPORGAMM-PRODUKT**
ROUTING METHOD FOR FORWARDING TASK INSTRUCTIONS BETWEEN COMPUTER SYSTEMS, COMPUTER NETWORK INFRASTRUCTURE, AND COMPUTER PROGRAM PRODUCT
PROCÉDÉ DE ROUTAGE POUR TRANSFÉRER DES INSTRUCTIONS DE TÂCHES ENTRE DES SYSTÈMES INFORMATIQUES, INFRASTRUCTURE DE RÉSEAU D'ORDINATEURS AINSI QUE PRODUIT-PROGRAMME D'ORDINATEUR

(30) Priorität: 03.06.2014 DE 102014107783
(43) Veröffentlichungstag der Anmeldung: 12.04.2017
(73) Patentinhaber: Fujitsu Technology Solutions Intellectual Property GmbH, 80807 München (DE)
(72) Erfinder: CLAES, Heinz-Josef, 61130 Nidderau (DE)
(74) Vertreter: Epping - Hermann - Fischer
(86) Internationale Anmeldenummer: PCT/EP2015/062157
(87) Internationale Veröffentlichungsnummer: WO 2015/185508

(56) Entgegenhaltungen:
- EP-A1- 1 879 323
- US-A1- 2007 157 307
- US-A1- 2010 031 019
- US-A1- 2013 124 757
- US-A1- 2013 232 559
- US-A1- 2013 239 169

## Beschreibung

Die Erfindung betrifft ein Routing-Verfahren zur Weiterleitung von Task-Anweisungen zwischen abgesicherten Computersystemen in einer Computernetz-Infrastruktur, eine entsprechende Computernetz-Infrastruktur sowie ein Computerprogramm-Produkt.

Verteilte Rechnernetze beziehungsweise so genannte Computernetz-Infrastrukturen beschreiben eine Mehrzahl von Computersystemen, die über Datenverbindungen miteinander kommunizieren können. Dabei werden zum Teil vertrauliche Inhalte ausgetauscht, auf die nicht-autorisierte Personen keine Zugriffsmöglichkeit haben sollen. Insbesondere in Computernetz-Infrastrukturen, welche Server-Client-Topologien umfassen, werden vertrauliche Daten, zum Beispiel Kundendaten oder Benutzerdaten zwischen dem Client und dem Server ausgetauscht, wobei ein Zugriff Dritter auf diese Daten unterbunden werden muss.

Herkömmliche Sicherheitsstrategien zur Erhöhung des Datenschutzes umfassen einerseits Vorschriften (Prozesse, die eingehalten werden sollen) sowie Regeln (Gebote beziehungsweise Verbote) für dritte Personen, beispielsweise Administratoren, wodurch nur ein eingeschränkter beziehungsweise kontrollierter Zugriff auf vertrauliche Daten möglich sein soll. Insbesondere wird ein Zugriff auf vertrauliche Daten in einem Computersystem durch vordefinierte Zugriffsrechte (Log in-Rechte oder Benutzerrechte) eingeschränkt, so dass nur (vertrauenswürdige) Personen Zugriff auf die vertraulichen Daten haben, welche über die entsprechenden Rechte verfügen. Die Dokumente US2013124757 und US2010031019 offenbaren jeweilige Verfahren,wobei Routing-Informationen in Datenpaketen definiert sind.

Andererseits sind technische Maßnahmen an beziehungsweise in den Computersystemen vorgesehen, welche einen physischen und/oder logischen Zugriff auf Computersysteme verhindern beziehungsweise auf autorisierte Personen einschränken sollen.

Derartige Ansätze zur Verbesserung des Datenschutzes sind zur Datensicherheit zwar förderlich, haben jedoch den Nachteil, dass sie in der Regel keine zwingenden Maßnahmen darstellen, um einen Zugriff auf vertrauliche Daten zu unterbinden.

Ferner arbeiten gängige Computernetz-Infrastrukturen für den Datenaustausch beziehungsweise zur Kommunikation untereinander mit Zugangsmöglichkeiten (beispielsweise über Netzwerk) beziehungsweise Möglichkeiten der Ansprechbarkeit von Diensten in den Computersystemen, welche die Computersysteme empfindlich gegen Angriffe von außen machen. Denn zu einer Ansprechbarkeit von Diensten ist ein laufendes Programm an einem oder mehreren Netzwerk-Ports eines Computersystems erforderlich. Dieses laufende Programm stellt eine potenzielle Sicherheitslücke für Angriffe von außen über Netzwerke dar.

Dabei besteht eine Gefahr darin, dass unter Umständen ein Angreifer (Cracker) oder ein interner Mitarbeiter, der sich Zugang zu einem Computersystem verschafft, vertrauliche Daten auf diesem Computersystem abgreifen kann und/oder durch den Angriff Zugang zu weiteren Computersystemen in der Computernetz-Infrastruktur erlangt, z.B. weil er sich über eine manipulierte Signatur als vertrauenswürdig tarnt. Andererseits bedarf es in einer Computernetz-Infrastruktur zur Kommunikation und Verarbeitung von Informationen zwischen einzelnen Computersystemen notwendiger Kommunikationsstrukturen, um beispielsweise einen Task auf einem Ziel-Computersystem durch ein anderes Computersystem in der Computernetz-Infrastruktur anweisen zu können.

Die Aufgabe der vorliegenden Erfindung besteht darin, den Schutz vor Angriffen auf Computersysteme innerhalb einer Computernetz-Infrastruktur, insbesondere den unerlaubten Zugriff auf vertrauliche Daten, durch technische Maßnahmen zu verbessern und dennoch eine Kommunikationsstruktur vorzuschlagen, welche eine zufriedenstellende und weitaus sicherere Weiterleitung von Daten innerhalb der Computernetz-Infrastruktur gewährleistet.

In einem ersten Aspekt wird diese Aufgabe durch ein Routing-Verfahren nach Anspruch 1 gelöst (und nach dem entsprechenden Anspruch 12).

Das Routing-Verfahren umfasst die Schritte:
- Aufrufen von Routing-Informationen, die in einem Key-Computersystem hinterlegt sind, wobei die Routing-Informationen zumindest ein Routing zu einem oder mehreren zwingend einzubindenden Computersystemen entlang eines Kommunikationspfades zwischen dem Key-Computersystem, einer Gruppe aus einem oder mehreren Vermittlungs-Computersystemen und einem Ziel-Computersystem innerhalb der Computernetz-Infrastruktur definieren,
- Erstellen einer Task-Datei im Key-Computersystem, wobei die Task-Datei zumindest die Routing-Informationen sowie eine Task-Beschreibung wenigstens eines Tasks für das Ziel-Computersystem umfasst,

- Übertragen der Task-Datei anhand der Routing-Informationen entlang des definierten Kommunikationspfades vom Key-Computersystems vermittels der Gruppe der Vermittlungs-Computersysteme auf das Ziel-Computersystem,
- Überprüfen der Gültigkeit der Task-Datei durch das Ziel-Computersystem,
- Ausführen wenigstens eines Tasks im Ziel-Computersystem anhand der Task-Datei, falls das Überprüfen der Gültigkeit der Task-Datei erfolgreich war,
wobei sowohl das Key-Computersystem als auch das Ziel-Computersystem vorbestimmte, für dieses Verfahren verwendete Netzwerk-Ports derart geschlossen halten, dass kein Verbindungsaufbau zum Key-Computersystem oder zum Ziel-Computersystem von außen zugelassen wird und somit ein Zugriff über ein Netzwerk vermittels dieser Netzwerk-Ports verhindert wird,
wobei jedoch das Key-Computersystem und das Ziel-Computersystem eine Verbindung zu einem Vermittlungs-Computersystem aufbauen können, um eine Task-Datei in dem Vermittlungs-Computersystem abzulegen oder von dort abzuholen.

Bei einem derartigen Routing-Verfahren sind notwendige Instanzen bzw. Kommunikationsknoten (Computersysteme) auf einem Kommunikationspfad (von ggf. mehreren möglichen Kommunikationspfaden) zwischen einem Key-Computersystem, einer Gruppe aus einem oder mehreren Vermittlungs-Computersystemen und einem Ziel-Computersystem zur Weiterleitung und Verarbeitung einer Task-Anweisung zwingend vorbestimmt. Das bedeutet, dass die Übermittlung einer Task-Anweisung an ein Ziel-Computersystem einer Route gehorcht, auf der bestimmte Instanzen bzw. Kommunikationsknoten durch das Key-Computersystem vorab festgelegt sind. Auf diese Weise wird innerhalb des Key-Computersystems ein Weg (Routing) entlang notwendiger Instanzen mit gegebenenfalls zu erfolgenden Aktionen vorab festgelegt. Eine Kommunikation zwischen verteilten Computersystemen in einer Computernetz-Infrastruktur zur Weiterleitung von Task-Anweisungen an ein Ziel-Computersystem ist somit auf vorab festgelegte beteiligte Computersysteme entlang eines Kommunikationspfades eingeschränkt.

Es ist denkbar, bei dem vorliegenden Verfahren zwischen einem sogenannten "statischen" Routing und einem sogenannten "dynamischen" Routing zu unterscheiden.

Bei einem statischen Routing ist der gesamte Kommunikationspfad bis hin zu einem Ziel-Computersystem im Key-Computersystem vorab festgelegt. Das statische Routing kann aus Sicherheitsgründen verwendet werden, so dass Manipulationen des Weges keine Angriffsmöglichkeiten für potentielle Angreifer (Cracker) bilden.

Beim dynamischen Routing sind lediglich notwendig zu beteiligende Computersysteme entlang eines möglichen Kommunikationspfades für eine Akzeptierung einer Task-Datei in einem Ziel-Computersystem vorab durch das Key-Computersystem festgelegt. Ein konkreter Kommunikationspfad, ggf. inklusive eines konkreten Ziel-Computersystems, wird dann erst "auf dem Weg", ggf. abschnittsweise, von den beteiligten Computersystemen ermittelt. Dies hat den Vorteil, dass für ein Routing unter Umständen flexibel reagiert werden kann, und dennoch die notwendige Sicherheit gegen Manipulationen erhalten bleibt. Im Key-Computersystem müssen dann lediglich Routing-Informationen definiert werden, die für mehrere Routings zu diversen Ziel-Computersystemen verwendet werden können, ohne für jedes Ziel-Computersystem ein eigenes Routing vordefinieren zu müssen. Ferner erlaubt das dynamische Routing eine gewisse Freiheit für beteiligte Computersysteme, selbst ein Ziel-Computersystem festzulegen.

Es ist auch denkbar, verschiedene alternative Kommunikationspfade zu einem Ziel-Computersystem durch das Key-Computersystem zu definieren, wobei durch im Prozess beteiligte Computersysteme eine Auswahl eines oder mehrerer dieser alternativen Kommunikationspfade erfolgt. Es ist ferner denkbar, dass im Prozess beteiligte Computersysteme mehrere Ziel-Computersysteme aus einer durch das Key-Computersystem vordefinierten Gruppe von Ziel-Computersystemen auswählen. Kommunikationspfade zu diesen Ziel-Computersystemen können unterschiedlich sein und anhand der oben erläuterten Vorgehensweisen (statisch, dynamisch, alternativ) definiert sein.

Ein gegebenenfalls manipulatives Abweichen von vermittels des Key-Computersystems vordefinierten, im Kommunikationspfad beteiligten Computersystemen und ein damit einhergehendes Umleiten sicherheitskritischer Informationen und Daten auf unter Umständen nicht autorisierte Computersysteme von Angreifern (Cracker) wird somit gegenüber herkömmlichen Lösungen deutlich erschwert. Auf diese Weise kann durch das vorliegende Verfahren die Sicherheit innerhalb einer Computernetz-Infrastruktur erhöht werden.

Bei dem hier erläuterten Verfahren verhalten sich Key-Computersystem und Ziel-Computersystem zudem als eingekapselte Systeme. Ein Zugriff auf diese Computersysteme für einen Verbindungsaufbau über ein Netzwerk ist zumindest unter bestimmten Betriebsbedingungen (vorteilhaft dauerhaft während der Durchführung des hier erläuterten Verfahrens beziehungsweise der obigen Verfahrensschritte) nicht bzw. nur deutlich erschwert möglich.

Der Begriff "vorbestimmte Netzwerk-Ports" bedeutet, dass im Key- beziehungsweise Ziel-Computersystem alle oder nur ausgewählte sicherheitskritische Netzwerk-Ports, z.B. die für dieses Verfahren verwendeten Netzwerk-Ports, dauerhaft oder vorübergehend geschlossen sind.

Dies hat den Vorteil, dass sowohl auf dem Key- als auch auf dem Ziel-Computersystem keine Programme eingerichtet, gestartet bzw. notwendig sind, die zum Zweck der Ansprechbarkeit beziehungsweise des Verbindungsaufbaus von außen die entsprechenden Netzwerk-Ports abhören (sogenanntes "listening") und eine potenzielle Sicherheitslücke (zum Beispiel durch Buffer-Overflow) bilden. Somit bedeutet der Begriff "geschlossene Netzwerk-Ports" in diesem Kontext, dass diese keine "listening ports" sind, d.h. kein Verbindungsaufbau von außen zugelassen wird. Ein dritter ist in diesem Falle nicht in der Lage, sich von außen über Netzwerk am Key-Computersystem oder am Ziel-Computersystem zu authentifizieren oder einzuloggen, zum Beispiel bei Unix-basierten Systemen über einen Secure-Shell- (SSH-)Deamon, oder spezielle Aktionen auf dem Key- beziehungsweise Ziel-Computersystem durchzuführen.

Allerdings kann für eine erste Benutzergruppe ein lokaler Zugriff auf das Key-Computersystem eingerichtet sein (z.B. für ein Sicherheitspersonal). Für eine zweite Benutzergruppe kann ein lokaler Zugriff auf das Ziel-Computersystem eingerichtet sein. Vorteilhaft wird jedoch ein lokaler Zugriff der jeweiligen Benutzergruppe auf das jeweils andere Computersystem verhindert. Vorteilhaft wird ein lokaler Zugriff auf ein entsprechendes Computersystem für eine jeweilige Benutzergruppe erst über das hier beschriebene Verfahren als Teil eines Prozesses temporär freigeschaltet.

Im Unterschied zu dem Key- und dem Ziel-Computersystem erlaubt das Verfahren jedoch einen Zugriff auf ein Vermittlungs-Computersystem aus der Gruppe der Vermittlungs-Computersysteme von außen. Ein jedes aus der Gruppe der Vermittlungs-Computersysteme ist dabei als "offenes" System mit wenigstens einem ansprechbaren offenen ("listening") Netzwerk-Port über Netzwerk zugänglich. Das bedeutet, dass auf einem Vermittlungs-Computersystem beispielsweise Programme laufen und/oder Applikationen vorbereitet sind, so dass das Key-Computersystem oder das Ziel-Computersystem auf ein Vermittlungs-Computersystem zugreifen können und eine Verbindung zum Vermittlungs-Computersystem aufbauen können, um eine Task-Datei gemäß dem vorgestellten Verfahren (über eine dann aufgebaute Verbindung, "established") in einem Vermittlungs-Computersystem abzulegen oder von dort abzuholen. Unter Sicherheitsaspekten ist ein solches "offenes" Vermittlungs-Computersystem ähnlich zu bewerten wie ein traditionelles, speziell abgesichertes Computersystem.

Somit dient ein jedes Vermittlungs-Computersystem als (abgesicherter, aber ansprechbarer) Vermittler für eine Kommunikation zwischen dem Key-Computersystem und dem Ziel-Computersystem, welche jedoch selbst eingekapselt sind. Auf diese Weise ist ein vordefiniertes Routing-Verfahren zur Informationsweitergabe und Weiterleitung von Task-Anweisungen vermittels der Gruppe der Vermittlungs-Computersysteme trotz eingekapselter Key- und Ziel-Computersysteme möglich.

Eine Task-Datei kann im Key-Computersystem mit wenigstens einem privaten Schlüssel signiert und ggf. mit einem öffentlichen Schlüssel des Ziel-Computersystems (partiell) verschlüsselt werden. Das Key-Computersystem selbst kann somit der Task-Datei Informationen hinzufügen, die (vertrauliche) Angaben zu Quelle, Ziel oder einem entsprechenden Routing ermöglichen.

In diesem Kontext sind Task-Dateien vorbereitet zur Ausführung vorbestimmter Prozesse (Tasks) in einem Ziel-Computersystem. Derartige Prozesse können z.B. sein:
- das Speichern und/oder Verarbeiten von übertragenen Daten,
- der Neustart eines Programms im Ziel-Computersystem,
- die Anweisung zu einem physischen Zugang zum Ziel-Computersystem,
- das Wiederherstellen von Backup-Daten oder
- ein SSH-Zugriff auf das Ziel-Computersystem.

Entsprechende Kombinationen derartiger Aktionen und Anweisungen ist natürlich denkbar. Task-Dateien können gegebenenfalls um bestimmte Informationen im Key-Computersystem oder in weiteren Computersystemen ergänzt werden. Dadurch sind sowohl eine Event-Steuerung des Ziel-Computersystems beziehungsweise eine Informationsweitergabe zwischen dem Key-Computersystem und dem Ziel-Computersystem sowie ein flexibles Hinzufügen von Informationen während des Prozesses zu dessen Steuerung ermöglicht. Es ist alternativ oder ergänzend denkbar, dass Task-Dateien ein oder mehrere Programme, Skripte o.ä. enthalten, die auf dem Ziel-Computersystem oder auf weiteren im Prozess beteiligten Computersystemen ausgeführt werden können.

Eine Task-Datei unterscheidet sich grundlegend von einem reinen Kommando-Befehl des Key-Computersystems an das Ziel-Computersystem, weil ein Kommando-Befehl zu dessen Auswertung auf Seiten des Ziel-Computersystems ein kontinuierlich laufendes, nach außen offenes und damit angreifbares Programm notwendig macht. Ein derartiges Programm entfällt jedoch, wie bereits erläutert, beim vorliegenden Verfahren mangels eines Zugriffs über Netzwerk auf das Ziel-Computersystem.

Zum Übertragen einer Task-Datei auf das Ziel-Computersystem kann ein Prozess angestoßen werden, welcher die ausgewählte Task-Datei im entsprechenden Vermittlungs-Computersystem aufruft und automatisiert vom Vermittlungs-Computersystem auf das Ziel-Computersystem überträgt. Vorteilhaft ist das automatisierte Übertragen der Task-Datei vom Vermittlungs-Computersystem auf das Ziel-Computersystem so ausgestaltet, dass ein Dritter von außen darauf keine Einflussmöglichkeiten hat und somit eine Gefahr für Manipulationen des Ziel-Computersystems über die Task-Datei ausgeschlossen ist. Im Ziel-Computersystem kann dann die Gültigkeit der Task-Datei überprüft werden und ein entsprechender Task ausgeführt werden.

Eine Task-Datei kann im Kommunikationspfad von einem ersten Vermittlungs-Computersystem zumindest an ein zweites Vermittlungs-Computersystem aus der Gruppe der Vermittlungs-Computersysteme weitergeleitet werden. Ferner kann auch eine Gruppe von mehreren Ziel-Computersystemen eingerichtet sein, die durch das Verfahren angesprochen werden.

Der generelle Vorteil des hier erläuterten Verfahrens besteht darin, dass durch Festlegen und gegebenenfalls Signieren von Vorgaben über einen notwendigen Weg bzw. auf einem Weg notwendige Instanzen (Routing) innerhalb des Key-Computersystems ein Rahmen vorgegeben wird, was wann durch welches Computersystem durchgeführt werden kann, darf und muss. Nicht-autorisierte Computersysteme und/oder Benutzer entsprechender Computersysteme, welche nicht innerhalb des vorgegebenen Kommunikationspfades liegen sind ausgeschlossen. Ferner sind die Computersysteme, in denen Daten verarbeitet werden, durch (dauerhaft) geschlossene Netzwerk-Ports gegen Angriffe von außen gesichert. Auf diese Weise ist eine erhöhte Sicherheit vertraulicher Daten in der Computernetz-Infrastruktur gewährleistet.

Vorteilhaft umfasst das hier erläuterte Verfahren zusätzlich die folgenden Schritte:
- Übertragen einer Anfrage-Datei von einem aus einer Gruppe von einem oder mehreren Bearbeitungs-Computersystemen auf eines aus der Gruppe der Vermittlungs-Computersysteme, wobei die Anfrage-Datei vorbestimmte Informationen zur Durchführung eines Tasks auf dem Ziel-Computersystems enthält,
- Übertragen der Anfrage-Datei vom Vermittlungs-Computersystem auf das Key-Computersystem, wobei das Key-Computersystem eine Verbindung zum Vermittlungs-Computersystem aufbaut, um die Anfrage-Datei vom Vermittlungs-Computersystem abzuholen,
- Erstellen der Task-Beschreibung durch das Key-Computersystem, wobei anhand der vorbestimmten Informationen der Anfrage-Datei eine vorbestimmte Grundfunktionalität eines Tasks durch das Key-Computersystem ausgewählt und gegebenenfalls Durchführungsparameter zur Durchführung des Tasks im Ziel-Computersystem durch das Key-Computersystem festgelegt werden.

Durch ein Bearbeitungs-Computersystem der erläuterten Art kann somit ein vorbestimmter Task auf dem Ziel-Computersystem initiiert und angewiesen werden. Durch vorbestimmte Informationen der Anfrage-Datei erfolgt im Key-Computersystem eine Auswahl einer vordefinierten Grundfunktionalität eines entsprechenden Tasks in Ziel-Computersystemen. Eine entsprechende Grundfunktionalität kann beispielsweise ein Prozess, eine Anweisung und/oder Aktion der oben erläuterten Art sein.

Eine Grundfunktionalität kann beispielsweise durch ein vorbereitetes "Formular" im Key-Computersystem hinterlegt sein. Dieses Formular kann beispielsweise von einem Benutzer einer Benutzergruppe vorgegeben sein, die einen lokalen Zugriff auf das Key-Computersystem hat. Unter Umständen können (und sollen) entsprechende Formulare durch private Schlüssel signiert sein, welche jedoch nicht im Key-Computersystem hinterlegt sind. Auf diese Weise sind mögliche Grundfunktionalitäten möglicher Ziel-Computersysteme durch vordefinierte Formulare im Key-Computersystem vorgegeben. Nicht-vordefinierte Formulare können dabei nicht erstellt werden, da private Schlüssel für die Signierung von Formularen im Key-Computersystem nicht verfügbar sind. Auf diese Weise ist eine Manipulation durch Vergabe manipulierter Formulare und damit manipulierter Grundfunktionalitäten stark erschwert.

Somit ist es für einen Benutzer eines Bearbeitungs-Computersystems ausschließlich möglich, vermittels einer Anfrage-Datei aus vordefinierten Grundfunktionalitäten für einen Task im Ziel-Computersystem auszuwählen und gegebenenfalls Parameter zur Durchführung des entsprechenden Tasks zu bestimmen. Somit sind Anweisungen innerhalb der Computernetz-Infrastruktur auf die Auswahl an Funktionalitäten beschränkt, welche durch das Key-Computersystem bereitgestellt ist. Aus den vordefinierten Grundfunktionalitäten für einen Task und den entsprechend bestimmten Parametern zur Durchführung des Tasks kann die Task-Beschreibung erstellt werden. Diese enthält also notwendige Informationen, welcher Task unter welchen Bedingungen auf dem Ziel-Computersystem durchzuführen ist. Die Task-Beschreibung kann auch eine Kennung bzw. ID enthalten, welche auf dem Ziel-Computersystem einem oder mehreren Skripten zur Durchführung des Tasks zugeordnet werden kann.

Bevorzugt umfassen die vorbestimmten Informationen der Anfrage-Datei solche des anfragenden Bearbeitungs-Computersystems als Anweisungsgeber und/oder solche des Ziel-Computersystems als Anweisungsempfänger und/oder eine digitale Signatur des anfragenden Bearbeitungs-Computersystems und/oder weitere, z.B. vertrauliche Daten oder Inhalte.

Das bedeutet, dass eine Anfrage-Datei vermittels der vorbestimmten Informationen Quelle und Ziel einer Kommunikation spezifizieren kann. Ferner kann eine qualifizierte Signatur (zum Beispiel bei Unix-basierten Systemen via GPG) erstellt werden, um die Quelle als vertraulich verifizieren zu können. Dies verhindert eine Manipulation der Anfrage-Datei und schließlich der im Key-Computersystem erstellten Task-Datei durch eine nicht-autorisierte Quelle.

Beispielsweise kann eine Signatur dadurch erstellt werden, dass über vorbestimmte Daten eine Hash-Funktion (z.B. via MD5 oder SHA) gebildet wird, welche anschließend mit einem privaten Schlüssel eines Unterzeichners (beispielsweise innerhalb des anfragenden Bearbeitungs-Computersystems oder des Key-Computersystems) verschlüsselt wird. Diese verschlüsselte Signatur wird gemeinsam mit einem Sicherheitszertifikat mit den entsprechenden Daten innerhalb einer digital signierten Datei (Anfrage-Datei bzw. Task-Datei) zusammengefasst. Auf Empfängerseite (zum Beispiel lokal im Ziel-Computersystem) wird dann wiederum der Hash-Wert über die übermittelten Daten gebildet und mit dem Hash-Wert der digitalen Signatur verglichen, welche zuvor mit einem öffentlichen Schlüssel des Unterzeichners entschlüsselt wurde. Falls die beiden Hash-Werte übereinstimmen, ist die Signatur gültig und kennzeichnet eine vertrauenswürdige Quelle. Eine Manipulation dieses Systems erfordert die Berechnung oder Ermittlung der asymmetrischen Schlüssel (privater Schlüssel und öffentlicher Schlüssel). Ein weiterer genereller Vorteil des erläuterten Verfahrens besteht also darin, dass Signaturen (sowohl im anfragenden Bearbeitungs-Computersystem als auch im Key-Computersystem) mit Hilfe eines privaten Schlüssels nur lokal (und nicht über Netzwerk) und ggf. kaskadiert dezentral vorgenommen werden können.

Zudem können vermittels der ergänzten Informationen vertrauliche Inhalte in der Task-Datei übertragen werden, zum Beispiel vorbestimmte Informationen für einen Ziel-Benutzer des Ziel-Computersystems. Die Task-Datei kann sämtliche Informationen zum Beispiel als .tar-File zusammenfassen. Vorteilhaft hält auch ein jedes aus der Gruppe der Bearbeitungs-Computersysteme zumindest vorübergehend oder dauerhaft vorbestimmte, für dieses Verfahren verwendete Netzwerk-Ports derart geschlossen, dass kein Verbindungsaufbau zu dem jeweiligen Bearbeitungs-Computersystem von außen zugelassen wird und somit ein Zugriff über ein Netzwerk vermittels dieser Netzwerk-Ports verhindert wird, wobei jedoch ein jedes aus der Gruppe der Bearbeitungs-Computersysteme eine Verbindung zu einem Vermittlungs-Computersystem aufbauen kann, um eine Task-Datei oder eine Anfrage-Datei in dem Vermittlungs-Computersystem abzulegen oder von dort abzuholen. Somit verhält sich auch die Gruppe der Bearbeitungs-Computersysteme als eingekapselte Systeme, wie oben erläutert. Für eine dritte Benutzergruppe, die sich von der ersten und zweiten Benutzergruppe (siehe oben für Key- sowie Ziel-Computersysteme) unterscheidet, kann ein lokaler Zugriff auf ein jeweiliges Bearbeitungs-Computersystem eingerichtet sein, wobei jedoch ein lokaler Zugriff der jeweiligen Benutzergruppe auf die jeweils anderen Computersysteme verhindert wird bzw. stark erschwert wird.

Somit ist auch ein Zugriff auf die Gruppe der Bearbeitungs-Computersysteme von außen über Netzwerk nicht möglich bzw. stark erschwert. Ein laufendes Programm (für einen Dienst) an einem Netzwerk-Port zur Ansprechbarkeit von außen ist in keinem der Bearbeitungs-Computersysteme vorgesehen und notwendig. Dies erhöht die Sicherheit der Computernetz-Infrastruktur. Dennoch sind die Bearbeitungs-Computersysteme in den Kommunikationsprozess zur Weiterleitung von Task-Anweisungen eingebunden und können Anfrage-Dateien (wie oben erläutert) zur Anweisung eines vorbestimmten Tasks in einem Ziel-Computersystem gemäß dem oben erläuterten Verfahren initiieren und eine Event-Steuerung einer Aktion in einem Ziel-Computersystem auslösen.

Vorteilhaft definieren bei dem Verfahren der erläuterten Art die Routing-Informationen wenigstens eines aus der Gruppe der Bearbeitungs-Computersysteme innerhalb der Computernetz-Infrastruktur als zwingend einzubindendes Computersystem, wobei das Verfahren zusätzlich die folgenden Schritte umfasst:
- Übertragen der Task-Datei von wenigstens einem aus der Gruppe der Vermittlungs-Computersysteme auf wenigstens eines aus der Gruppe der Bearbeitungs-Computersysteme,
- Durchführen wenigstens einer Aktion im Bearbeitungs-Computersystem,
- Übertragen der Task-Datei vom Bearbeitungs-Computersystem zurück auf das Vermittlungs-Computersystem.

Durch die vorgenannten Maßnahmen wird die Task-Datei auf ihrem Weg entlang des Kommunikationspfades zwangsläufig an wenigstens ein (weiteres) Bearbeitungs-Computersystem übertragen. Dies löst im Bearbeitungs-Computersystem das (ggf. automatisierte) Durchführen einer vorbestimmten Aktion aus. Diese Aktion kann beispielsweise das Überprüfen der Gültigkeit der Task-Datei, das Einfügen weiterer Daten in die Task-Datei und/oder ein weiteres Signieren der Task-Datei mit wenigstens einem privaten Schlüssel und/oder ein Verschlüsseln der Task-Datei mit einem öffentlichen Schlüssel des Ziel-Computersystems (oder auch eines anderen Bearbeitungs-Computersystems im Routing) umfassen.

Zusätzliche oben genannte Aktionen in beteiligten Bearbeitungs-Computersystemen können vermittels des Key-Computersystems fest vorgegeben sein. Alternativ oder ergänzend kann lediglich das Routing zu einem Bearbeitungs-Computersystem durch das Key-Computersystem vorgegeben sein, wobei ein Bearbeitungs-Computersystem entscheiden kann, ob es eine Aktion an der Task-Datei durchführt oder nicht. Es ist auch denkbar, eine Aktion lediglich darauf zu reduzieren, dass die Task-Datei im Bearbeitungs-Computersystem bestätigt wird, bevor sie vermittels des Verfahrens an ein weiteres Computersystem übertragen wird. Entscheidend bei sämtlichen Aktionen gemäß dem hier erläuterten Verfahren ist, dass diese lokal in einem beteiligten Computersystem (Key-Computersystem oder Bearbeitungs-Computersystem) ausgeführt werden, so dass sicherheitsrelevante Passphrasen oder Schlüssel nur lokal (d.h. dezentral) auf den Computersystemen vorliegen oder verwendet werden müssen und nicht innerhalb der Computernetz-Infrastruktur ausgetauscht werden. Auch diese Tatsache erhöht die Sicherheit gegen Angriffe eines Eindringlings sowohl von außen als auch von innen. Ergänzend zu den genannten Maßnahmen können auch (räumliche) Sicherheitszonen gebildet werden, die einen physischen Zugriff (ggf. abgesichert durch Hochsicherheits-Racks) und damit die Manipulation von Computersystemen anderer Interner verhindern.

Durch einen oben erläuterten mehrstufigen sowie verketteten Prozess der Bearbeitung und/oder Signierung der Task-Datei durch mehrere beteiligte Computersysteme innerhalb der Computernetz-Infrastruktur sind mehrere Instanzen notwendig, um eine gültige und zulässige Task-Anweisung für ein Ziel-Computersystem zu generieren. Die Task-Datei muss daher mehrere Instanzen durchlaufen, um zum Ziel-Computersystem zu gelangen. Der Rahmen, welches Computersystem was wann vermittels der Task-Datei tun muss, ist vorab durch die Routing-Informationen im Key-Computersystem festgelegt.

Ein kumulatives Bearbeiten der Task-Datei (zum Beispiel ein mehrfaches Signieren) durch mehrere Bearbeitungs-Computersysteme neben dem Key-Computersystem bei dezentraler Topologie einer auf diese Weise eingerichteten Computernetz-Infrastruktur führt zu erhöhter Sicherheit gegen Angriffe. Dabei wird ein n-Augen-Prinzip erzwungen und eine Nachvollziehbarkeit, welches Computersystem was wann gemacht hat, realisiert. Die einzige Möglichkeit für einen Angreifer (Cracker), die Task-Datei auf ihrem Weg vom Key-Computersystem zum Ziel-Computersystem zu manipulieren, wäre das Eindringen in sämtliche beteiligten Computersysteme, um dort die geforderten Signaturen zum Beispiel durch Abgreifen einer Passphrase eines Bearbeiters zu manipulieren. Nachdem die Computernetz-Infrastruktur jedoch keine zentrale Angriffsmöglichkeit bietet, weil sämtliche Computersysteme dezentral verteilt sind und jedes Computersystem "bruchstückhaft" eine Teilaufgabe übernimmt, ist eine Manipulation des gesamten Verfahrens nur sehr schwer denkbar bzw. wäre nur sehr aufwändig realisierbar.

Eine weitreichende Möglichkeit der Manipulation der über das erläuterte Verfahren übertragenen Task-Dateien ergäbe sich lediglich durch Eindringen in das Ziel-Computersystem (das Computersystem, das einen Task gemäß der Task-Datei ausführen soll) gegebenenfalls in Verbindung mit der Erlangung von Administrationsrechten auf dem Ziel-Computersystem. Dann könnte dort die Überprüfung der Signaturen (inklusive der Signatur einer vorbestimmten Grundfunktionalität der Task-Datei durch das Key-Computersystem) manipuliert werden. Dies ist jedoch aufgrund einer verketteten Signierung der Task-Dateien sehr aufwändig. Allerdings hält das Ziel-Computersystem - wie oben erläutert - sämtliche für die hier beschriebenen Zwecke maßgeblichen Netzwerk-Ports geschlossen, so dass eine Ansprechbarkeit von Diensten des Ziel-Computersystems von außen über Netzwerk nicht möglich ist. Somit ist auch eine Manipulation eines durch eine verfahrensgemäß übertragene Task-Datei angewiesenen Tasks im Ziel-Computersystems nur mit erheblichem Aufwand denkbar.

Es kann auch ein physischer Zugriffs- bzw. Manipulationsschutz vermittels eines abgesicherten Hochsicherheits-Racks, in dem sich das Ziel-Computersystem befindet, eingerichtet sein, wie bereits oben für das Key- bzw. die Bearbeitungs-Computersysteme erläutert.

Das Verfahren wird in einer Ausgestaltung in mehreren Zyklen rekursiv zwischen der Gruppe der Vermittlungs-Computersysteme und der Gruppe der Bearbeitungs-Computersysteme durchgeführt, wobei sich die oben genannten Vorteile einer verketteten, mehrfachen Bearbeitung (z.B. Signierung) der Task-Datei ergeben. Die Task-Datei ist dabei als rekursiv angelegte Archiv-Datei eingerichtet. Das bedeutet, dass die Task-Datei als Archiv-Datei wiederum eine innere Archiv-Datei sowie eine Signatur eines Bearbeitungs-Computersystems oder des Key-Computersystems aus einem vorangegangenen Zyklus enthält. Die innere Archiv-Datei kann wiederum eine weitere innere Archiv-Datei und gegebenenfalls eine weitere Signatur aufweisen, usw. Somit liegt die Task-Datei als geschachtelte Archiv-Datei vor.

In einer Konstellation werden nach einem Bearbeiten der Task-Datei in einem ersten Schritt neu hinzukommende Daten sowie das gesamte zuvor empfangene Task-Datenpaket in ein neues inneres Archiv eingepackt. In einem zweiten Schritt wird wiederum dieses neue innere Archiv zusammen mit einer durch das Bearbeitungs-Computersystem im aktuellen Zyklus erstellten Signatur zu einer neuen Task-Datei als Archiv eingepackt. Pro Rekursionszyklus ergeben sich somit zwei zusätzliche geschachtelte Archive.

In dieser Konstellation kann sich für die Task-Datei die folgende beispielhafte Struktur ergeben:
id.taskid.tar
--> task.tar
--> task.tar.asc.

Hierbei beschreibt "id.taskid.tar" die eigentliche Task-Datei als .tar-Archiv. In diesem Archiv liegt das innere Archiv "task.tar", welches den rekursiv abgelegten Datenbestand aus den vorhergehenden Zyklen beinhaltet. Daneben ist eine Signatur "task.tar.asc" eingerichtet, durch die das innere Archiv "task.tar" von einem Bearbeitungs-Computersystem oder vom Key-Computersystem in einem vorangegangenen Zyklus signiert worden ist.

Die innere Archiv-Datei "task.tar" enthält in dieser Konstellation eine oder mehrere, gegebenenfalls geschachtelt archivierte und zu bearbeitende Arbeitsdateien. Bei einer verfahrensgemäßen Bearbeitung der Task-Datei in einem jeweiligen Bearbeitungs-Computersystem müssen die Arbeitsdateien für die Auswertung eines jeweiligen Schrittes jedoch vollständig ausgepackt werden. Somit ergibt sich aufgrund der Ausführung der Task-Datei als geschachtelte Archiv-Datei in dieser Konstellation die Problematik, dass die Arbeitsdateien bei einem rekursiven Entpacken der Task-Datei - abhängig von der Anzahl der bisher mit ihnen durchgeführten verfahrensgemäßen Transportschritte - mehrfach vorliegen. Ist beispielsweise zum vollständigen Entpacken der Arbeitsdateien in einem ersten Schritt ein Entpacken der Task-Datei "id.taskid.tar" und in einem zweiten Schritt ein Entpacken der inneren Archiv-Datei "task.tar" notwendig, so werden die Arbeitsdateien zweimal gespeichert. Nach n Zyklen des Verfahrens würden die Arbeitsdateien bei einem vollständigen Entpacken bereits 2 x n mal vorliegen. Bei relativ kleinen Arbeitsdateien ist das kein Problem. Bei großen Arbeitsdateien, zum Beispiel Importdateien, die gegebenenfalls etliche Gigabyte oder Terabyte umfassen können, ist jedoch ein großer Plattenbedarf erforderlich, wobei nachteilig entsprechende Verzögerungen im Prozess die Folge sein können.

Aufgrund der genannten Problematik wird somit in einer vorteilhaften alternativen Konstellation die Task-Datei als rekursiv angelegte Archiv-Datei in abgewandelter Form eingerichtet. In dieser zweiten Konstellation kann sich für die Task-Datei die folgende Struktur ergeben:
id.taskid.tar
--> pullupFiles
--> task.tar
--> task.tar.asc.

Die eine oder mehreren Arbeitsdateien sind hierbei losgelöst von der inneren Archiv-Datei "task.tar" in der Task-Datei "id.taskid.tar" enthalten. Die Arbeitsdateien sind in einem speziellen Verzeichnis "pullupFiles" separat zur inneren Archiv-Datei "task.tar" auf der Verzeichnisebene der inneren Archiv-Datei "task.tar" in der Task-Datei "id.taskid.tar" eingebettet. Daneben umfasst die Task-Datei "id.taskid.tar" in dieser zweiten Konstellation analog zur ersten Konstellation eine Signatur "task.tar.asc" eines Bearbeitungs-Computersystems oder des Key-Computersystems aus einem vorangegangenen Zyklus.

In dieser Konstellation beinhaltet die innere Archiv-Datei "task.tar" rekursiv geschachtelte Signatur-Daten früherer Zyklen, welche durch die Signatur "task.tar.asc" des letzten vorangegangenen Zyklus signiert wurden. Die im aktuellen Zyklus geänderten Daten werden jedoch anders als bei der ersten Konstellation unmittelbar in das Verzeichnis "pullupFiles" eingepflegt und nicht in die rekursive Struktur "task.tar" eingebunden. Dies hat den Vorteil, dass zum weiteren Bearbeiten der Arbeitsdateien innerhalb der Task-Datei "id.taskid.tar" in einem weiteren Zyklus lediglich die Task-Datei "id.taskid.tar" einmalig entpackt werden muss, so dass die Arbeitsdateien auch nur einmal gespeichert werden.

Dennoch sind die Arbeitsdateien und entsprechende Änderungen darin mit der rekursiven Struktur "task.tar" verknüpft, so dass sich auch hier die Vorteile einer verketteten, mehrfachen Bearbeitung (z.B. Signierung) der Task-Datei ergeben. Allerdings hat diese zweite Konstellation den Vorteil, dass das Datenvolumen zur Durchführung des rekursiven Verfahrens im Vergleich zur ersten Konstellation deutlich verringert werden kann. Auf diese Weise wird auch die Performance des Verfahrens verbessert.

Sämtliche Maßnahmen des Ein- und Auspackens von Task-Dateien können mithilfe eines Archivers durchgeführt werden.

Vorteilhaft werden bei einem Verfahren gemäß der zweiten Konstellation die folgenden Teilschritte durchgeführt:
- Entpacken der als Archiv-Datei eingerichteten Task-Datei,
- Bearbeiten der einen oder mehreren entpackten Arbeitsdateien,
- Einpacken zumindest der inneren Archiv-Datei sowie der Signatur aus dem vorangegangenen Zyklus in eine zweite innere Archiv-Datei,
- Erstellen einer neuen Signatur des in diesem Zyklus beteiligten Bearbeitungs-Computersystems, sowie
- Einpacken der zweiten inneren Archiv-Datei, der bearbeiteten einen oder mehreren Arbeitsdateien und der neu erstellten Signatur in eine neue als Archiv-Datei eingerichtete Task-Datei.

Vorteilhaft sind bei dem Verfahren der erläuterten Art innerhalb eines Bearbeitungs-Computersystems mehrere Sicherheitsinstanzen eingerichtet. Zumindest die Entgegennahme der Task-Datei vom Vermittlungs-Computersystem, das Durchführen wenigstens einer Aktion anhand der Task-Datei, sowie das Übertragen der Task-Datei vom Bearbeitungs-Computersystem zurück auf das Vermittlungs-Computersystem werden in voneinander getrennten Prozessen durch unterschiedliche Sicherheitsinstanzen durchgeführt. Vorteilhaft kann eine Sicherheitsinstanz eines Prozesses keine Verbindung bzw. Kommunikation zu einer Sicherheitsinstanz eines anderen Prozesses aufbauen, sodass ein Zugriff auf die Sicherheitsinstanz des anderen Prozesses verhindert wird,
wobei jedoch ein nachgelagerter Prozess über einen Event-Mechanismus ausgelöst wird, so dass eine Sicherheitsinstanz des nachgelagerten Prozesses die Task-Datei oder Daten der Task-Datei weiterverarbeiten kann.

Der Begriff "Sicherheitsinstanz" kann hier einerseits unterschiedliche Benutzer umfassen, die im Rahmen von eingeschränkten Benutzerrechten einen lokalen Zugriff auf das Bearbeitungs-Computersystem haben, um den jeweiligen Prozess auszuführen. Insbesondere sind die Benutzerrechte dabei vorteilhaft auf den jeweiligen Prozess eingeschränkt bzw. zum Durchführen eines Prozesses ein Zugriff auf einen bestimmten Speicherbereich, ausgewählte Verzeichnisse usw. eingeschränkt. Andererseits umfasst der Begriff "Sicherheitsinstanz" auch Programme bzw. Daemons, die zur Durchführung der einzelnen Prozesse eingerichtet sind und in bestimmten (logisch getrennten) Speicherbereichen gespeichert sind. Derartige Programme haben vorteilhaft nur auf eingeschränkte Speicherbereiche Zugriff.

Eine Interprozesskommunikation zwischen den einzelnen Programmen und/oder Benutzern wird derart eingeschränkt, dass keine Kommunikation zwischen den einzelnen Prozessen möglich ist. Insbesondere können eine Task-Datei oder Daten der Task-Datei nicht unmittelbar von einer Sicherheitsinstanz eines vorgelagerten Prozesses an ein nachgelagertes Programm oder einen entsprechenden Benutzer weitergesendet werden oder Funktion eines nachgelagerten Prozess durch einen vorgelagerten Prozess aufgerufen werden. Vielmehr kann eine Sicherheitsinstanz eines vorgelagerten Prozesses keine Verbindung zu einer Sicherheitsinstanz eines nachgelagerten Prozesses aufbauen, sodass ein Zugriff auf die Sicherheitsinstanz des nachgelagerten Prozesses verhindert wird. Dadurch werden Manipulationen an nachgelagerten Sicherheitsinstanzen durch manipulierte Prozesse oder manipulierte Task-Dateien bzw. ein Ausweiten eines Angriffs lokal im jeweiligen Bearbeitungs-Computersystem möglichst erschwert. Somit verhält sich die Ver-/Bearbeitung der Task-Datei innerhalb eines Bearbeitungs-Computersystems ähnlich wie der Austausch der Task-Datei zwischen den einzelnen Computersystemen der Computernetz-Infrastruktur.

Die interne Weitergabe der Task-Datei oder von Daten aus der Task-Datei bzw. das Auslösen eines entsprechenden nächsten Prozesses werden über ein oder mehrere Dateisysteme realisiert. Vorteilhaft kann die Weitergabe oder das Auslösen des nächsten Prozesses über einen Event-Mechanismus (z.B. bei Linux "inotify" oder "inotify2") oder optional über Pollen oder über eine Kombination derartiger Mechanismen erfolgen. Vorteilhaft werden nachgelagerte Prozesse bzw. Sicherheitsinstanzen nachgelagerter Prozesse eventgesteuert über den Kernel des Bearbeitungs-Computersystems (z.B. über "inotify") erst dann aufgerufen, gestartet oder aktiviert, wenn der vorgelagerte Prozess abgeschlossen ist.

Der Kommunikationsfluss in einem Bearbeitungs-Computersystem erfolgt vorteilhaft auf Basis der Task-Datei. Eine Task-Datei durchläuft unterschiedliche (logisch getrennte) Sicherheits-Ebenen bzw. Speicherbereiche im Bearbeitungs-Computersystem, die unterschiedlichen Benutzern mit minimierten Rechten (z.B. restricted Shell) bzw. unterschiedlichen Programmen oder Daemons zugeordnet sind. Zumindest folgende generelle Prozesse sind für die Verarbeitung der Task-Datei vorgesehen:
- Annahme der Daten über das Netzwerk bzw. verfahrensgemäßes Holen der Daten vom Vermittlungs-Computersystem. Der für diesen Prozess eingerichtete Benutzer sollte nach Möglichkeit nicht über Rechte einer Shell verfügen, um ein Einloggen am Bearbeitungs-Computersystem als dieser Benutzer und damit verbundene Manipulationen von außen möglichst zu erschweren.
- Auspacken und Kontrolle der Daten der Task-Datei. Eine Kontrolle umfasst hier optional die Validierung der Signaturen sowie optional die Zulässigkeit bisheriger Eingaben. Optional können weitere Kontrollen oder Maßnahmen zur Datenaufbereitung erfolgen. Es kann auch die Größe der Task-Datei kontrolliert werden. Beispielsweise kann zunächst (z.B. per SSH) eine ggf. signierte Angabe zur maximal erlaubten Dateigröße und anschließend die Task-Datei selbst übertragen werden. Im Weiteren erfolgt dann die Überprüfung, ob die Task-Datei die geforderte Maximalgröße erfüllt. Ggf. erfolgt ein Verfahrensabbruch, wenn die zulässige Dateigröße überschritten wird.
- Initiierung und verfahrensgemäße Durchführung einer Aktion auf dem Bearbeitungs-Computersystem. Diese Aktion muss ggf. mit Administrationsrechten durchgeführt werden. Sie kann das Ausführen eines Skriptes / Programmes für z.B. eine administrative Aktion sein oder z.B. die Ergänzung der Daten der Task-Datei und / oder eine Signierung durch einen Administrator, Operator, oder eine sonstige Person sein. Ein weiteres Beispiel ist die Feststellung der Identität einer Person, z.B. über biometrische Merkmale.
- Ermitteln des nächsten Bearbeitungs- oder Ziel-Computersystem für das verfahrensgemäße Routing der (ergänzten) Task-Datei, Einpacken sowie Signieren der Task-Datei.
- Transport zum nächsten Bearbeitungs- oder Ziel-Computersystem.

Die Reihenfolge und insbesondere die Aufteilung der oben genannten Aspekte in die übergeordneten Prozesse kann optional verändert werden.

Bevorzugt umfasst das Übertragen der Task-Datei von einem aus der Gruppe der Vermittlungs-Computersysteme auf das Ziel-Computersystem oder auf eines aus der Gruppe der Bearbeitungs-Computersysteme die folgenden Schritte:
- Senden einer vorbestimmten Sequenz an Paket-Daten vom Vermittlungs-Computersystem an das Ziel-Computersystem oder das Bearbeitungs-Computersystem, wobei die vorbestimmten Netzwerk-Ports des Ziel-Computersystems oder des Bearbeitungs-Computersystems geschlossen sind und wobei die Sequenz in einer vorbestimmten Reihenfolge einen oder mehrere Netzwerk-Ports des Ziel-Computersystems oder des Bearbeitungs-Computersystems anspricht,
- Überprüfen der gesendeten Sequenz auf Übereinstimmung mit einer vordefinierten Sequenz im Ziel-Computersystem oder im Bearbeitungs-Computersystem, sowie
- Veranlassen des Übertragens der Task-Datei durch das Ziel-Computersystem oder das Bearbeitungs-Computersystem, falls die Überprüfung der gesendeten Sequenz positiv ist, wobei das Ziel-Computersystem bzw. das Bearbeitungs-Computersystem seinerseits eine Verbindung zum Vermittlungs-Computersystem aufbaut und die Task-Datei abholt.

Eine Übertragung einer Anfrage-Datei eines Bearbeitungs-Computersystems von einem Vermittlungs-Computersystem auf das Key-Computersystem gemäß den weiter oben erläuterten Maßnahmen kann entsprechend den an dieser Stelle aufgeführten Verfahrensschritten erfolgen.

Die hier aufgeführten zusätzlichen Verfahrensschritte haben den Vorteil, dass grundsätzlich die (für das Verfahren maßgeblichen) Netzwerk-Ports des Ziel-Computersystems oder eines beteiligten Bearbeitungs-Computersystems - in oben erläutertem Sinne - geschlossen sind und einen Verbindungsaufbau zum Ziel-Computersystem oder zu weiteren Bearbeitungs-Computersystemen von außen blockieren bzw. einen manipulativen Zugriff deutlich erschweren. Das Veranlassen des Übertragens der Task-Datei vermittels des Ziel-Computersystems oder eines Bearbeitungs-Computersystems kann ein automatisierter Prozess zum Übertragen der jeweiligen Task-Datei auf das Ziel-Computersystem oder ein Bearbeitungs-Computersystem (zum Beispiel über den Unix-basierten Befehl "Secure Copy", scp) sein. Gemäß dem Prozess baut das Ziel-Computersystem oder ein Bearbeitungs-Computersystem seinerseits eine Verbindung zum Vermittlungs-Computersystem auf und holt die Task-Datei ab. Dieser Prozess kann gestartet werden, nachdem eine vorbestimmte Sequenz an Paket-Daten an das Ziel-Computersystem gesendet wurde, falls diese Sequenz mit einer vordefinierten Sequenz übereinstimmt. Die IP-Adresse des Sequenz-sendenden Computersystems kann dabei statisch im Ziel-Computersystem vorgegeben oder dynamisch aus den dem Kernel des Ziel-Computersystems bekannten Quell-IP-Adressen möglicher Sequenz-sendender Computersysteme entnommen werden.

Ein derartiges Verfahren ist unter dem Begriff "Port-Knocking" (englisch: to knock-anklopfen) bekannt. Die vorgenannten Schritte können beispielsweise über einen sogenannten Knock-Daemon, also ein Programm, welches Port-Knocking ermöglicht, durchgeführt werden. Der Knock-Daemon horcht an den Netzwerk-Ports des Ziel-Computersystems, überprüft die an das Ziel-Computersystem gesendete Sequenz von Paket-Daten und veranlasst gegebenenfalls (z.B. durch Starten eines Skriptes/Programmes) ein gesteuertes Übertragen der entsprechenden Task-Datei von einem Vermittlungs-Computersystem an das Ziel-Computersystem, wenn die gesendete Sequenz mit einer vordefinierten Sequenz übereinstimmt. Der oben beschriebene Ablauf ermöglicht somit das Übertragen/Kopieren der Task-Datei von einem Vermittlungs-Computersystem auf das Ziel-Computersystem oder ein entsprechendes Bearbeitungs-Computersystem, ohne dass das Ziel-Computersystem oder das entsprechende Bearbeitungs-Computersystem hierfür einen offenen Port mit einem ansprechbaren Programm vorhalten muss.

Alternativ oder ergänzend zum oben erläuterten Port-Knocking ist auch denkbar, dass das Ziel-Computersystem oder ein beteiligtes Bearbeitungs-Computersystem von sich aus in regelmäßigen Abständen beim Vermittlungs-Computersystem anfragt (Polling), ob eine oder mehrere auszutauschende Task-Dateien vorliegen. Ist dies der Fall, kann eine entsprechende Übertragung der Task-Datei vom Vermittlungs-Computersystem an das Ziel-Computersystem oder das entsprechende Bearbeitungs-Computersystem initiiert werden. Es ist auch denkbar, dass das Ziel-Computersystem oder das entsprechende Bearbeitungs-Computersystem ein Polling durchführt, wenn zum Beispiel eine bestimmte Zeitspanne überschritten wird, in der kein Port-Knocking durchgeführt worden ist. Probleme beim Port-Knocking können so erkannt werden und die Funktionalität bleibt erhalten.

Durch die erläuterten Maßnahmen ist eine Kommunikation zwischen abgesicherten Computersystemen innerhalb der Computernetz-Infrastruktur via der Gruppe der Vermittlungs-Computersysteme möglich, wobei gleichzeitig durch das Key-Computersystem vermittels der Routing-Informationen ein fester Rahmen der Kommunikationsstruktur zur Weiterleitung von Task-Anweisungen vermittels entsprechender Task-Dateien vorgegeben ist. Auf diese Weise bilden das Key-Computersystem, die Gruppe der Vermittlungs-Computersysteme sowie die Gruppe der Bearbeitungs-Computersysteme gemäß dem hier erläuterten Verfahren eine Art sichere "Kommunikations-Middleware" zwischen einem einen Task initiierenden Bearbeitungs-Computersystem und dem Ziel-Computersystem, auf dem ein entsprechender Task ausgeführt werden soll.

Bevorzugt weist bei dem Verfahren der erläuterten Art der Kommunikationspfad eine Mehrzahl von Teilpfaden auf, wobei die Task-Datei von einem Vermittlungs-Computersystem entlang der Mehrzahl von Teilpfaden an eine Mehrzahl von im Kommunikationspfad nachfolgenden Computersystemen übertragen wird.

Die im Kommunikationspfad nachfolgenden Computersysteme können Vermittlungs-, Bearbeitungs- oder Ziel-Computersysteme sein. Auf diese Weise kann die Task-Datei von einem einzigen Computersystem an eine Mehrzahl von empfangenden Computersystemen weiterverteilt werden, gemäß einer Kommunikationsstruktur 1:n. Die genannten Maßnahmen sind auch iterativ denkbar, so dass eine kaskadierte Weiterverteilung, das heißt von einem aus der Mehrzahl der Empfänger wiederum an eine Mehrzahl von weiteren Computersystemen, erfolgt.

Bei der genannten Weiterverteilung kann ein asynchrones Versenden erfolgen. Wenn ein Computersystem nicht erreicht werden kann, wird dabei die Task-Datei unabhängig davon an die anderen Computersysteme übertragen. Ferner können neben unterschiedlichen Empfangs-Computersystemen auch unterschiedliche Übertragungsverfahren eingesetzt werden (zum Beispiel gemäß den Unix-basierten Anweisungen scp, rsync, speziell hierfür erstellte Übertragungsprotokolle, usw.).

Bevorzugt wird bei dem Verfahren der erläuterten Art die Task-Datei in wenigstens einem entlang des Kommunikationspfades beteiligten Computersystem mit einer innerhalb der Computernetz-Infrastruktur eindeutigen Kennung versehen oder eine bereits bestehende Kennung der Task-Datei ergänzt.

Eine entsprechende Kennung der Task-Datei ermöglicht eine Nachverfolgbarkeit auch über mehrere Instanzen des Kommunikationspfades hinweg. Ein Ergänzen der Kennung kann beispielsweise ein Versehen mit einem eindeutigen Zusatz sein. Dabei wird eine originäre Kennung einer ersten Instanz vorteilhaft derart ergänzt, dass die originäre Information unterscheidbar vom Zusatz erhalten bleibt und somit die Kennung auch über mehrere Stufen des Ergänzens hinweg eindeutig auf den Ursprung zurückführbar ist.

Vorteilhaft wird bei dem Verfahren der Verlauf der Task-Datei entlang des Kommunikationspfades über ein Monitoring anhand der Kennung überwacht und/oder eine Verweildauer der Task-Datei auf einem entlang des Kommunikationspfades beteiligten Computersystem überwacht und/oder sämtliche Verfahrensschritte durch das Monitoring protokolliert.

Anhand der Kennung der Task-Datei in Verbindung mit den hinterlegten Routing-Informationen kann festgestellt werden, ob der Kommunikationspfad eingehalten wird und welche Computersysteme im Routing (erfolgreich) erreicht werden können und dürfen. Eine Verweildauer der Task-Datei auf einem vorbestimmten Computersystem kann zum Beispiel durch das Key-Computersystem bei Erstellen der Task-Datei definiert werden. Ferner kann definiert werden, dass nach Ablauf der Verweildauer die Task-Datei nicht weitertransportiert werden darf oder kann oder gegebenenfalls unbrauchbar wird. Gegebenenfalls können Alarmmeldungen erzeugt oder sonstige Maßnahmen ergriffen werden, welche über das Routing protokolliert werden.

Vorteilhaft wird bei dem Verfahren das Monitoring zumindest teilweise über ein statisch laufendes Programm auf einem oder mehreren entlang des Kommunikationspfades beteiligten Computersystemen bewerkstelligt. Die Möglichkeit einer statischen Konfiguration des Monitorings vermittels eines statisch laufenden Programms auf einem oder mehreren zu überwachenden Computersystemen verhindert, dass keine Parameter zur Konfiguration innerhalb der Computernetz-Infrastruktur ausgetauscht werden müssen und potenzielle Sicherheitslücken durch laufende Programme entstehen (z.B. durch Buffer-Overflow).

Vorteilhaft baut ein dediziertes Monitoring-Computersystem eine verschlüsselte Verbindung zu dem Programm für das Monitoring auf. Das Monitoring-Computersystem ist vorteilhaft separat von den weiteren beteiligten Computersystemen eingerichtet. Vorteilhaft kann das Monitoring über ein eigenes Monitoring-Netz eingerichtet sein. Damit ist das Monitoring unabhängig von der weiteren Kommunikationsstruktur der Computernetz-Infrastruktur. Das Monitoring-Computersystem hält vorteilhaft sämtliche Netzwerk-Ports in Richtung der zu überwachenden Computersysteme geschlossen. Durch Aufbau einer verschlüsselten Verbindung von einem derart eingekapselten Monitoring-Computersystem aus wird die Sicherheit somit ebenfalls erhöht. Es ist vorteilhaft, eine verschlüsselte Verbindung zu den zu überwachenden Computersystemen beispielsweise über SSH oder VPN einzurichten, sowie keine weiteren Ports an den zu überwachenden Computersystemen für Verbindungen offenzuhalten.

Alternativ oder ergänzend zu einem dedizierten Monitoring-Computersystem können auch beteiligte Computersysteme Monitoring-(Teil-) Aufgaben übernehmen.

In einem weiteren Aspekt wird die obige Aufgabe durch eine Computernetz-Infrastruktur gelöst, welche zumindest umfasst:
- ein Key-Computersystem,
- ein Ziel-Computersystem und
- ein Vermittlungs-Computersystem.

Das Key-Computersystem ist eingerichtet, aus im Key-Computersystem hinterlegten, vordefinierten Routing-Informationen für ein Routing zu einem oder mehreren zwingend einzubindenden Computersystemen eine Task-Datei zu erzeugen und anschließend die Task-Datei vermittels des Vermittlungs-Computersystems an das Ziel-Computersystem zu übertragen.

Das Ziel-Computersystem ist eingerichtet, eine vermittels des Vermittlungs-Computersystems an das Ziel-Computersystem übertragene Task-Datei auf ihre Gültigkeit zu überprüfen und gegebenenfalls wenigstens einen Task im Ziel-Computersystem anhand der Task-Datei auszuführen.

Das Ziel-Computersystem und das Key-Computersystem weisen jeweils eine Zugriffssteuereinheit auf, die eingerichtet ist, vorbestimmte, für dieses Verfahren verwendete Netzwerk-Ports derart geschlossen zu halten, dass kein Verbindungsaufbau zum Key-Computersystem oder zum Ziel-Computersystem von außen zugelassen wird und somit ein Zugriff über ein Netzwerk vermittels dieser Netzwerk-Ports verhindert ist, jedoch ein Verbindungsaufbau vom Key-Computersystem bzw. vom Ziel-Computersystem zu einem Vermittlungs-Computersystem zugelassen wird, um eine Task-Datei in dem Vermittlungs-Computersystem abzulegen oder von dort abzuholen.

Bevorzugt umfasst die Computernetz-Infrastruktur weiterhin ein Bearbeitungs-Computersystem, welches eingerichtet ist, eine Anfrage-Datei zur Durchführung eines Tasks auf dem Ziel-Computersystem vermittels des Vermittlungs-Computersystems an das Key-Computersystem zu senden.

Das Key-Computersystem ist in diesem Zusammenhang vorteilhaft eingerichtet, vorbestimmte Informationen der Anfrage-Datei zur Durchführung des Tasks im Ziel-Computersystem in der Task-Datei zu hinterlegen. Das Bearbeitungs-Computersystem weist eine Zugriffssteuereinheit auf, die eingerichtet ist, vorbestimmte, für dieses Verfahren verwendete Netzwerk-Ports derart geschlossen zu halten, dass kein Verbindungsaufbau zum Bearbeitungs-Computersystem von außen zugelassen wird und somit ein Zugriff über ein Netzwerk vermittels dieser Netzwerk-Ports verhindert ist,
jedoch ein Verbindungsaufbau vom Bearbeitungs-Computersystem zum Vermittlungs-Computersystem zugelassen wird, um eine Task-Datei oder eine Anfrage-Datei in dem Vermittlungs-Computersystem abzulegen oder von dort abzuholen.

Eine Computernetz-Infrastruktur der erläuterten Art ermöglicht in vorteilhafter Weise die Durchführung eines Verfahrens der weiter oben erläuterten Art. Auch durch eine Computernetz-Infrastruktur dieser Art ergeben sich die im Zusammenhang mit dem oben erläuterten Verfahren genannten Vorteile analog. Sämtliche vorteilhaften Maßnahmen, die im Zusammenhang mit dem obigen Verfahren erläutert wurden, finden in entsprechenden strukturellen Merkmalen der Computernetz-Infrastruktur Anwendung und umgekehrt.

In einem weiteren Aspekt wird die obige Aufgabe durch ein Computerprogramm-Produkt gelöst, welches eingerichtet ist, auf einem oder mehreren Computersystemen ausgeführt zu werden und welches bei Ausführung ein Verfahren der oben erläuterten Art durchführt.

Weitere vorteilhafte Ausführungen sind in den Unteransprüchen sowie in der nachfolgenden Figurenbeschreibung offenbart.

Die Erfindung wird anhand mehrerer Zeichnungen im Folgenden näher erläutert.

Es zeigen:
- Figur 1A: eine schematisierte Darstellung einer Computernetz-Infrastruktur mit grundlegenden Verfahrensschritten zur Kommunikation,
- Figur 1B: die schematisierte Darstellung gemäß Figur 1A mit detaillierten Verfahrensschritten zur Kommunikation,
- Figur 2: eine schematisierte Darstellung einer weiteren Ausführung einer Computernetz-Infrastruktur sowie
- Figur 3: eine schematisierte Darstellung eines Teils einer Computernetz-Infrastruktur zur Weiterleitung von Daten an mehrere Empfänger.

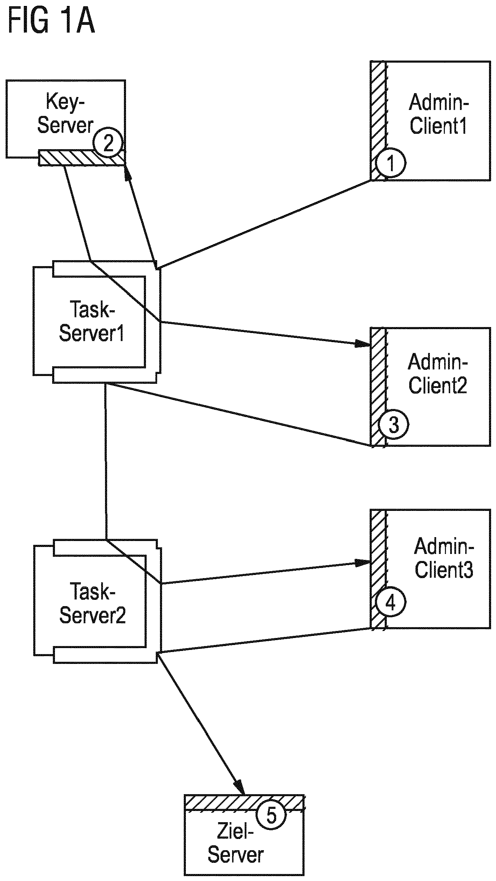

Figur 1A zeigt eine schematisierte Darstellung einer Computernetz-Infrastruktur, die eine Mehrzahl von Computersystemen umfasst und zur Weiterleitung von Task-Anweisungen zwischen abgesicherten Computersystemen eingerichtet ist.

Die Computernetz-Infrastruktur umfasst im Detail ein Key-Computersystem, welches als Key-Server eingerichtet ist, eine Gruppe von Vermittlungs-Computersystemen umfassend einen Task-Server 1 sowie einen Task-Server 2, sowie eine Gruppe von Bearbeitungs-Computersystemen, umfassend einen Admin-Client 1, einen Admin-Client 2 sowie einen Admin-Client 3. Ferner umfasst die Computernetz-Infrastruktur ein Ziel-Computersystem, in Figur 1A als Ziel-Server bezeichnet.

Grundlegend unterscheiden sich die beiden Vermittlungs-Computersysteme, der Task-Server 1 sowie der Task-Server 2, von den weiteren beteiligten Computersystemen. Task-Server 1 sowie Task-Server 2 sind im Gegensatz zu den anderen Computersystemen Computersysteme mit offenen Netzwerk-Ports, so dass beide Vermittlungs-Computersysteme, Task-Server 1 und Task-Server 2, von außen über Netzwerk vermittels der weiteren Computersysteme angesprochen werden können. Dennoch sind die Task-Server 1 und 2 vorteilhaft abgesicherte Systeme. Beispielsweise sind nur vordefinierte VPN- oder SSH-Verbindungen zu diesen Systemen zugelassen.

Der Key-Server, die Admin-Clients 1 bis 3 sowie der Ziel-Server sind dagegen abgesicherte Computersysteme, welche sämtliche vorbestimmte Netzwerk-Ports geschlossen halten. Dabei sind jeweils keine laufenden Programme oder Dienste an den Netzwerk-Ports dieser Computersysteme eingerichtet, so dass eine Ansprechbarkeit von außen über Netzwerk vermittels etwaiger offener Netzwerk-Ports nicht möglich ist. Auf diese Weise sind diese Computersysteme mit geschlossenen Netzwerk-Ports eingekapselte Systeme innerhalb der Computernetz-Infrastruktur. Dies ist im Vergleich zu den Vermittlungs-Computersystemen durch schraffierte Ein-/Ausgangsebenen am Key-Server, an den Admin-Clients 1 bis 3 sowie am Ziel-Server verdeutlicht.

Eine Kommunikation zwischen den beteiligten Computersystemen ist dennoch möglich. Der Key-Server, die Admin-Clients 1 bis 3 sowie der Ziel-Server können jeweils über Netzwerk auf den Task-Server 1 oder den Task-Server 2 zugreifen, weil die Task-Server 1 und 2 - wie oben erläutert - offene Netzwerk-Ports, unter Umständen mit laufenden Programmen, für eine Ansprechbarkeit von außen aufweisen. Somit können Daten-Pakete, Dateien oder Anfragen an die Task-Server 1 und 2 gerichtet, dorthin übertragen und dort abgelegt werden zur weiteren Kommunikation mit weiteren beteiligten Computersystemen.

Für eine Kommunikation von einem der Task-Server 1 oder 2 aus zum Key-Server, den Admin-Clients 1 bis 3 oder dem Ziel-Server bedient sich die Computernetz-Infrastruktur einem Port-Knocking-Prozess. Dies ist erforderlich, weil sowohl der Key-Server als auch die Admin-Clients 1 bis 3 und der Ziel-Server - wie oben erläutert - sämtliche Netzwerk-Ports geschlossen halten und von außen über Netzwerk keine laufenden Dienste auf diesen Computersystemen ansprechbar sind. Zur Kommunikation sendet somit ein Task-Server 1 oder 2 einem entsprechenden Computersystem (Key-Server, Admin-Client 1 bis 3, Ziel-Server) zunächst eine vorbestimmte Sequenz an Paket-Daten, wobei die Sequenz in einer vorbestimmten Reihenfolge einen oder mehrere Netzwerk-Ports des angesprochenen Computersystems anspricht. Daraufhin wird im angesprochenen Computersystem die gesendete Sequenz auf Übereinstimmung mit einer vordefinierten Sequenz überprüft.

Falls diese Überprüfung positiv ist, veranlasst das angesprochene Computersystem die Übertragung eines Daten-Paketes oder einer Datei, welche vom Task-Server 1 oder 2 auf das angesprochene Computersystem übertragen werden sollen. Auf diese Weise holt ein angesprochenes Computersystem Daten-Pakete oder Dateien zur weiteren Verarbeitung vom Task-Server 1 oder 2 ab. Ein derartiges Übertragen kann beispielsweise durch das Unix-basierte Protokoll "Secure Copy" (SCP) erfolgen. Entscheidend dabei ist, dass auf angesprochenen eingekapselten Computersystemen weiterhin sämtliche Netzwerk-Ports geschlossen bleiben. Durch den Port-Knocking-Prozess wird gewissermaßen bei den eingekapselten Computersystemen "angeklopft", so dass diese schließlich die für sie bestimmten Daten-Pakete von den Task-Servern 1 oder 2 abholen können.

Figur 1A zeigt schematisiert grundlegende Verfahrensschritte für ein Routing-Verfahren zur Weiterleitung von Task-Anweisungen zwischen dem Admin-Client 1 und dem Ziel-Server vermittels der Computernetz-Infrastruktur.

In einem Schritt 1 initiiert ein Bearbeiter des Admin-Clients 1 einen bestimmten Task, der auf den Ziel-Server ausgeführt werden soll. Dieser Task kann beispielsweise die Verarbeitung von zu übermittelnden Daten, der Neustart eines Programms, der physische Zugang zu einem Rack, in dem der Ziel-Server befindlich ist, die Wiederherstellung von Backup-Daten im Ziel-Server, ein eingeschränkter SSH-Zugriff auf den Ziel-Server oder ähnliches sein. Hierzu kann der Bearbeiter im Admin-Client 1 vorbestimmte Informationen zur Durchführung des Tasks auf dem Ziel-Server bestimmen und in einer Anfrage-Datei zusammenstellen. Diese Anfrage-Datei wird schließlich mit einem lokal im Admin-Client 1 vorliegenden Schlüssel (Passphrase) signiert. Die Anfrage-Datei wird vom Admin-Client 1 auf den Task-Server 1 übertragen. Anschließend führt der Task-Server 1 einen Port-Knocking-Prozess gegenüber dem Key-Server durch, wie oben erläutert.

Im Schritt 2 holt der Key-Server vom Task-Server 1 die Anfrage-Datei ab und vergleicht die darin enthaltenen Informationen mit vorbestimmten Grundfunktionalitäten eines möglichen Tasks auf dem Ziel-Server. Vorbestimmte Grundfunktionalitäten können beispielsweise als Formulardaten im Key-Server vorab definiert und hinterlegt sein, z.B. durch einen Sicherheitsbeauftragten. Ferner können im Key-Server Durchführungsparameter zur Durchführung eines durch den Admin-Client 1 angewiesenen Tasks im Ziel-Server festgelegt werden. Derartige Durchführungsparameter können beispielsweise Durchführungszeitpunkt, eine Durchführungsdauer, Identifikationsdaten vorbestimmter Instanzen (z.B. Sicherheitspersonal) oder ähnliches betreffen.

Der Key-Server erstellt aus den übertragenen Informationen und einer ausgewählten Grundfunktionalität für den betreffenden Task eine Task-Beschreibung und verpackt diese zusammen mit vorgegebenen Routing-Informationen in eine Task-Datei.

Die Routing-Informationen sind im Key-Server hinterlegt (z.B. ebenfalls von einem Sicherheitsbeauftragten) und definieren zumindest einen vorbestimmten Kommunikationspfad zwischen dem Key-Server und dem Ziel-Server. Auf diese Weise geben die Routing-Informationen einen festgelegten Rahmen vor, welchen Übertragungsweg die Task-Datei gehen muss und welches beteiligte Computersystem wann eine vorbestimmte Aktion durchführen muss, um die erstellte Task-Datei zu bestätigen, zu bearbeiten, zu ergänzen und schließlich auf den Ziel-Server zur Durchführung des auf diese Weise definierten Tasks zu transportieren. Vorteilhaft kann die Identität der genannten Vorgaben auf dem Key-Server, auf dem Ziel-Server oder auch in jedem Zwischenschritt mit Hilfe einer Signatur, z.B. des genannten Sicherheitsbeauftragten, verifiziert werden. Da private Schlüssel zur Erstellung einer derartigen Signatur vorteilhaft in dem hier betrachteten Netzwerk überhaupt nicht verfügbar sind, sind Manipulationen der Vorgaben (wie beispielsweise der Routing-Informationen) durch einen Eindringling weitgehend ausgeschlossen.

Die Task-Datei muss somit einem im Key-Server fest vorgegebenen Kommunikationspfad folgen, damit ein entsprechender Task erfolgreich auf dem Ziel-Server durchgeführt werden kann. Durch ein derartig festgelegtes Routing ist die Sicherheit gegen Manipulationen von außen erhöht, weil ein Abweichen von dem vorgegebenen Kommunikationspfad oder von einer vordefinierten Aktion in einem bestimmten Computersystem erkannt wird und ggf. nicht zur erfolgreichen Durchführung eines Tasks im Ziel-Server führt.

Die im Key-Server erstellte Task-Datei, die die Task-Beschreibung sowie die Routing-Informationen enthält, wird vom Key-Server auf den Task-Server 1 übertragen und von dort unter Anwendung eines Port-Knocking-Prozesses auf den Admin-Client 2 übertragen. Der Admin-Client 2 holt dabei die Task-Datei vom Task-Server 1 nach dem Port-Knocking ab. Im Admin-Client 2 erfolgt in Schritt 3 die Durchführung einer vordefinierten lokalen Aktion.

Eine solche Aktion kann beispielsweise das Einfügen weiterer Daten in die Task-Datei und/oder das Signieren der Task-Datei mit wenigstens einem privaten Schlüssel des Admin-Clients 2 und/oder das Verschlüsseln der Task-Datei mit einem öffentlichen Schlüssel des Ziel-Servers umfassen. Ferner ist denkbar, dass eine Identifikation der Task-Datei erstellt oder eine bereits vorliegende Identifikation ergänzt wird. Dies dient der Nachverfolgbarkeit im Kommunikationspfad. Anhand der Identifikation kann die Task-Datei über ein Monitoring (nicht näher dargestellt) überwacht werden.

Nach Bearbeitung der Task-Datei im Admin-Client 2 wird die Task-Datei zurück auf den Task-Server 1 und von dort beispielhaft auf den Task-Server 2 übertragen. Dieser führt gegenüber dem Admin-Client 3 einen Port-Knocking-Prozess durch, so dass der Admin-Client 3, welcher anhand der Routing-Informationen im Kommunikationspfad logisch folgt, die durch den Admin-Client 2 bearbeitete Task-Datei vom Task-Server 2 abholt und im Schritt 4 eine erneute lokale Aktion anhand der Task-Datei durchführt. Auch diese Aktion kann ein Bearbeiten im oben erläuterten Rahmen umfassen. Es ist alternativ zur dargestellten Netzwerk-Struktur auch denkbar, die Task-Datei unmittelbar von Task-Server 1 auf den Admin-Client 3 zu übertragen.

Nach Durchführen der weiteren Aktion im Admin-Client 3 wird die Task-Datei zurück auf den Task-Server 2 übertragen. Anschließend führt der Task-Server 2 einen Port-Knocking-Prozess gegenüber dem Ziel-Server aus, wobei der Ziel-Server schließlich die Task-Datei vom Task-Server 2 abholt. In einem letzten Schritt 5 überprüft der Ziel-Server die Task-Datei und führt im Erfolgsfall einen in der Task-Datei definierten Task lokal aus.

Die erläuterte Computernetz-Infrastruktur sowie das Routing-Verfahren zur Weiterleitung von Task-Anweisungen gemäß der dargestellten Art und Weise bilden somit eine sichere Middleware-Struktur zwischen Admin-Client 1 als Anweisungsgeber und dem Ziel-Server als Anweisungsempfänger. Die weiteren Computersysteme (Key-Server, Task-Server 1 und 2 sowie die weiteren Admin-Clients 2 und 3) bilden eine dezentrale Topologie der Middleware-Struktur zur Weiterleitung, Ergänzung und/oder Signatur von Daten-Paketen an den Ziel-Server.

Ein kumulatives Bearbeiten einer durch den Key-Server erstellten Task-Datei vermittels einer Mehrzahl von Admin-Clients erhöht dabei die Sicherheit gegen Manipulationen der Task-Datei selbst oder an beteiligten Computersystemen durch Angreifer von außen. Denn ein Angreifer müsste für eine erfolgreiche Manipulation einen Zugang zu sämtlichen beteiligten Systemen erlangen und lokal innerhalb dieser Systeme beispielsweise Signaturen oder Passphrasen von Benutzern abgreifen, um letztlich eine kumulative Signatur der Task-Datei entlang des vordefinierten Kommunikationspfades zu manipulieren.

Die Computernetz-Infrastruktur gemäß Figur 1A und das zugrunde liegende Routing-Verfahren haben jedoch den Vorteil, dass eine dezentrale Topologie geschaffen ist, die eine Event-Steuerung des Ziel-Servers trotz eingekapselter Einzelsysteme (Key-Server sowie Admin-Clients 1 bis 3 und Ziel-Server) möglich macht. Entscheidend ist dabei das Zusammenspiel eines vorgegebenen Routings einer Task-Datei mit der Tatsache, dass sicherheitsrelevante Aktionen lokal auf eingekapselten Systemen durchgeführt werden, wobei diese Systeme keine offenen Netzwerk-Ports für eine Ansprechbarkeit und damit Angreifbarkeit von außen über Netzwerk aufweisen.

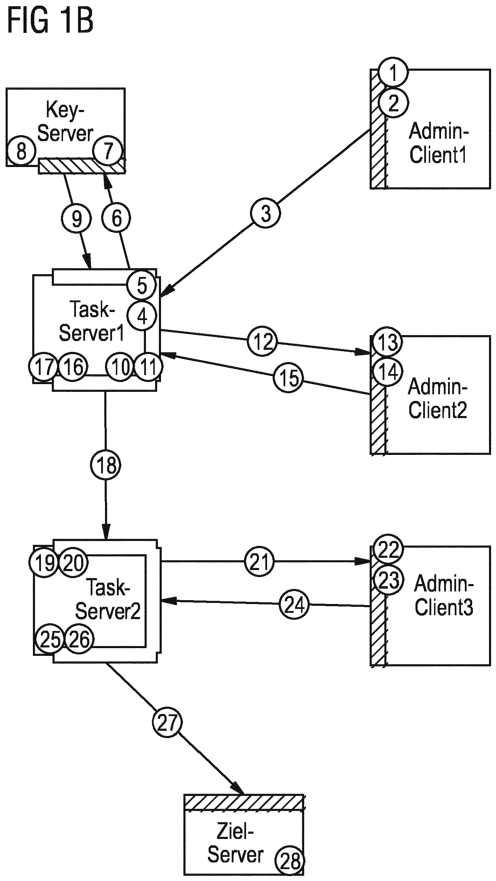

Figur 1B zeigt die Computernetz-Infrastruktur gemäß Figur 1A mit detaillierteren Verfahrensschritten. Diese sollen nachfolgend nochmals kurz veranschaulicht werden.

In Schritt 1 initiiert der Admin-Client 1 einen auf dem Ziel-Server durchzuführenden Task. In Schritt 2 ruft der Admin-Client 1 Routing-Informationen zum Key-Server auf und transportiert in Schritt 3 eine Anfrage-Datei an den Task-Server 1. Der Task-Server 1 empfängt in Schritt 4 die Anfrage-Datei und bestimmt in Schritt 5 ein Routing zum Key-Server. In Schritt 6 erfolgen ein Port-Knocking des Task-Servers 1 zum Key-Server sowie ein Abholen der Anfrage-Datei vom Task-Server vermittels des Key-Servers.

In Schritt 7 erstellt der Key-Server lokal eine Task-Datei und bestimmt in Schritt 8 ein Routing zurück auf den Task-Server 1. In Schritt 9 wird die erstellte Task-Datei vom Key-Server zurück auf den Task-Server 1 übertragen. Der Task-Server 1 empfängt in Schritt 10 die Task-Datei und ermittelt in Schritt 11 ein Routing auf den Admin-Client 2. In Schritt 12 wird ein Port-Knocking zum Admin-Client 2 durchgeführt und die Task-Datei vom Task-Server 1 vermittels des Admin-Clients 2 abgeholt.

In Schritt 13 erfolgt eine lokale Aktion anhand der Task-Datei im Admin-Client 2, wobei in Schritt 14 ein Routing zurück auf den Task-Server 1 bestimmt wird und in Schritt 15 die bearbeitete Task-Datei zurück auf den Task-Server 1 übertragen wird.

In Schritt 16 empfängt der Task-Server 1 die bearbeitete Task-Datei und bestimmt in Schritt 17 ein Routing zum Task-Server 2.

In Schritt 18 wird die Task-Datei weiter auf den Task-Server 2 übertragen und schließlich in Schritt 19 vom Task-Server 2 empfangen und dort abgelegt. In Schritt 20 bestimmt der Task-Server ein Routing auf den Admin-Client 3 und vollführt in Schritt 21 ein Port-Knocking zum Admin-Client 3, wobei letzterer die Task-Datei vom Task-Server 2 abholt.

In Schritt 22 erfolgt eine weitere lokale Aktion im Admin-Client 3 anhand der Task-Datei, wobei in Schritt 23 ein Routing zurück auf Task-Server 2 festgelegt wird und in Schritt 24 die weiterverarbeitete Task-Datei zurück auf den Task-Server 2 übertragen wird.

Der Task-Server 2 empfängt in Schritt 25 die weiterbearbeitete Task-Datei und bestimmt in Schritt 26 ein Routing zum Ziel-Server.

In Schritt 27 erfolgt ein Port-Knocking zum Ziel-Server, wobei der Ziel-Server die weiterbearbeitete Task-Datei vom Task-Server 2 abholt und schließlich in einem letzten Schritt 28 die Task-Datei überprüft und, falls erfolgreich, einen entsprechenden Task durchführt.

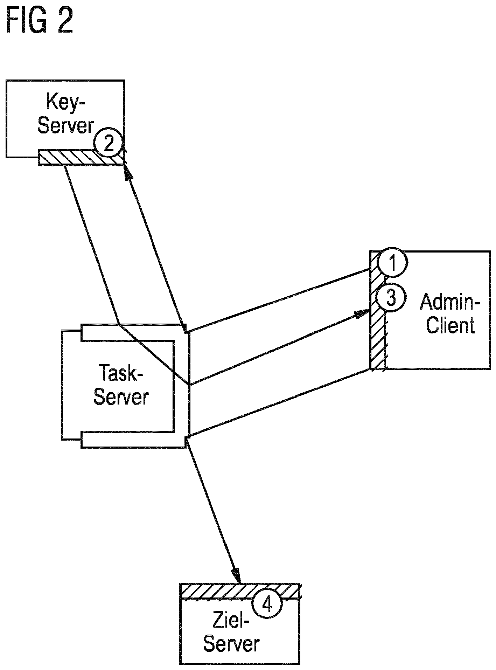

Figur 2 zeigt eine schematisierte Darstellung einer Computernetz-Infrastruktur gemäß einer weiteren möglichen Ausführung.

Hierbei umfasst die Computernetz-Infrastruktur lediglich einen Key-Server, einen Task-Server, einen Admin-Client sowie einen Ziel-Server. In dieser Konfiguration dient der Admin-Client zugleich der Initiierung eines Tasks vermittels einer Anfrage-Datei in einem ersten Schritt 1, sowie einer weiteren Bearbeitung einer im Schritt 2 vermittels des Key-Servers erstellten Task-Datei über eine lokal auszuführende Aktion im Admin-Client in Schritt 3.

Nach Ausführen dieser Aktion erfolgen ein Abholen der bearbeiteten Task-Datei vermittels des Task-Servers und ein Weitertransport auf den Ziel-Server, wobei dort der entsprechende Task nach Überprüfung der Task-Datei ausgeführt wird. Die weiterführenden Kommunikationsabläufe entsprechen im Wesentlichen denen gemäß Figuren 1A und 1B und bedürfen hier keiner weiteren Erläuterung.

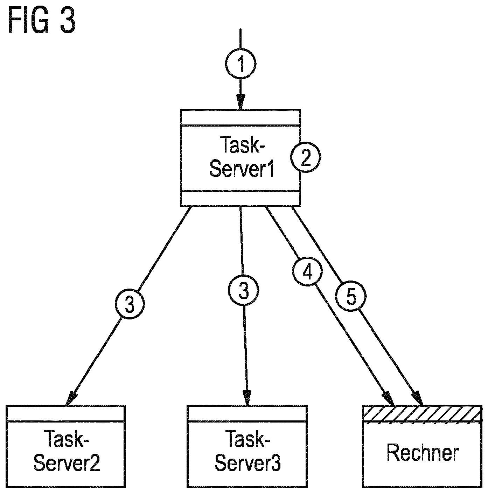

Figur 3 zeigt einen Teil einer Computernetz-Infrastruktur umfassend einen Task-Server 1, einen Task-Server 2, einen Task-Server 3 sowie einen Rechner. Der Rechner ist ein eingekapseltes System mit geschlossenen Netzwerk-Ports (siehe schraffierte Eingangsebene am Rechner). Der Rechner kann ein Admin-Client oder ein Ziel-Server der oben erläuterten Art oder auch ein aus diesen Systemen gemischt aufgebautes System sein.

Der Task-Server 1 ist dabei derart eingerichtet, dass Daten-Pakete parallel oder sequentiell über mehrere parallele Teilpfade einer Kommunikationspfad-Struktur an mehrere nachfolgende Computersysteme (Task-Server 2 und Task-Server 3 sowie Rechner) weiter übertragen werden können. Somit führt der Task-Server 1 eine sogenannte 1:n-Verteilung von Daten-Paketen durch.

In einem ersten Schritt 1 gelangt ein Daten-Paket zum Task-Server 1. In einem Schritt 2 bestimmt der Task-Server 1 anhand vordefinierter Routing-Informationen eine Liste von Empfängern, die das Daten-Paket erhalten sollen. Gemäß der Konfiguration aus Figur 3 handelt es sich bei den Empfängern um den Task-Server 2, den Task-Server 3 sowie den Rechner. In einem Schritt 3 wird das Daten-Paket repliziert und an den Task-Server 2 und den Task-Server 3 unmittelbar weitergeleitet.

Gegenüber dem Rechner, welcher - wie oben erläutert - geschlossene Netzwerk-Ports aufweist, erfolgt in Schritt 4 zunächst ein Port-Knocking, wobei in Schritt 5 schließlich der Rechner das Daten-Paket vom Task-Server 1 abholt.

Auf diese Weise ist eine 1:n-Weiterverteilung von Daten-Paketen möglich. Es ist auch denkbar, eine kaskadierte Verteilung vorzunehmen, wobei ein Empfänger aus einer Mehrzahl von Empfängern ein Daten-Paket wiederum an eine Mehrzahl von weiteren Empfängern weiterverteilt.

Es ist denkbar, ein Daten-Paket mit einer eindeutigen Kennung zu versehen oder eine bereits vergebene eindeutige Kennung mit einem eindeutigen Zusatz zu ergänzen (vgl. oben). Beispielsweise könnte der Task-Server 1 eine Kennung des empfangenen Daten-Paketes um einen Zusatz ergänzen, der eine Nachverfolgbarkeit erlaubt, an welche weiteren Empfänger das Daten-Paket zu senden ist beziehungsweise welcher Empfänger das Daten-Paket tatsächlich empfangen hat. Im Falle einer kaskadierten Weiterverteilung könnte somit eine Verkettung von ergänzten Identifikationen entstehen, so dass eine Nachverfolgbarkeit im gesamten Netzwerk möglich ist. Dabei ist erkennbar, von welcher Instanz an welche Instanz ein entsprechendes Daten-Paket versendet worden ist. Beispielsweise könnte ein Zusatz einer Identifikation eines Daten-Paketes einen Zähler "Max Counter" enthalten, welcher die Anzahl oder eine Nummerierung der zu erreichenden Systeme umfasst. Gemäß Figur 3 könnte der Zähler "Max Counter" dann beispielsweise mit dem Zusatz "3" versehen sein, nachdem drei Computersysteme als Empfänger dem Task-Server 1 nachgelagert sind. Ferner könnte der Zähler "Max Counter" jedes einzelne Paket mit einem Zusatz versehen, der ein entsprechendes Ziel eindeutig markiert. Der Zähler "Max Counter" könnte beispielsweise für den Task-Server 2 den Zusatz "1", für den Task-Server 3 den Zusatz "2" sowie für den Rechner den Zusatz "3" enthalten.

Die eindeutige Identifizierung eines Daten-Paketes kann über Monitoring überwacht und nachvollzogen sowie protokolliert werden.

Die dargestellten Ausführungsbeispiele möglicher Topologien einer Computernetz-Infrastruktur sind lediglich beispielhaft gewählt. Dabei wurden der Einfachheit halber lediglich maßgeblich beteiligte Komponenten dargestellt.

### Bezugszeichenliste

- Key-Server: Key-Computersystem
- Task-Server: Vermittlungs-Computersystem
- Admin-Client: Bearbeitungs-Computersystem
- Ziel-Server: Ziel-Computersystem
- Rechner: Computersystem
- 1 - 28: Verfahrensschritte

## Patentansprüche

1. Routing-Verfahren zur Weiterleitung von Task-Anweisungen zwischen abgesicherten Computersystemen in einer Computernetz-Infrastruktur, umfassend die Schritte:
- Aufrufen von Routing-Informationen, die in einem Key-Computersystem hinterlegt sind, wobei die Routing-Informationen zumindest ein Routing zu einem oder mehreren zwingend einzubindenden Computersystemen entlang eines Kommunikationspfades, in einem Netzwerk der Computernetz-Infrastruktur, zwischen dem Key-Computersystem, einer Gruppe aus einem oder mehreren Vermittlungs-Computersystemen und einem Ziel-Computersystem innerhalb der Computernetz-Infrastruktur definieren,
- Erstellen einer Task-Datei im Key-Computersystem, wobei die Task-Datei zumindest die Routing-Informationen sowie eine Task-Beschreibung wenigstens eines Tasks für das Ziel-Computersystem umfasst,
- Übertragen der Task-Datei anhand der Routing-Informationen entlang des Kommunikationspfades vom Key-Computersystem vermittels der Gruppe der Vermittlungs-Computersysteme auf das Ziel-Computersystem,
- Überprüfen der Gültigkeit der Task-Datei durch das Ziel-Computersystem,
- Ausführen wenigstens eines Tasks im Ziel-Computersystem anhand der Task-Datei, falls das Überprüfen der Gültigkeit der Task-Datei erfolgreich war,
wobei sowohl das Key-Computersystem als auch das Ziel-Computersystem vorbestimmte, für dieses Verfahren verwendete Netzwerk-Ports derart geschlossen halten, dass über das Netzwerk der Computernetz-Infrastruktur kein Verbindungsaufbau zum Key-Computersystem oder zum Ziel-Computersystem von außen zugelassen wird und somit ein Zugriff auf das Key-Computersystem oder das Ziel-Computersystem über das Netzwerk der Computernetz-Infrastruktur vermittels dieser Netzwerk-Ports verhindert wird,
wobei jedoch das Key-Computersystem und das Ziel-Computersystem jeweils eine Verbindung zu einem Vermittlungs-Computersystem von der Gruppe der Vermittlungs-Computersysteme aufbauen, um die Task-Datei in dem Vermittlungs-Computersystem abzulegen oder von dort abzuholen.

2. Verfahren nach Anspruch 1, welches zusätzlich die folgenden Schritte umfasst:
- Übertragen einer Anfrage-Datei von einem aus einer Gruppe von einem oder mehreren Bearbeitungs-Computersystemen auf eines aus der Gruppe der Vermittlungs-Computersysteme, wobei die Anfrage-Datei vorbestimmte Informationen zur Durchführung eines Tasks auf dem Ziel-Computersystem enthält,
- Übertragen der Anfrage-Datei vom Vermittlungs-Computersystem auf das Key-Computersystem, wobei das Key-Computersystem eine Verbindung zum Vermittlungs-Computersystem aufbaut, um die Anfrage-Datei vom Vermittlungs-Computersystem abzuholen,
- Erstellen der Task-Beschreibung durch das Key-Computersystem, wobei anhand der vorbestimmten Informationen der Anfrage-Datei eine vorbestimmte Grundfunktionalität eines Tasks durch das Key-Computersystem ausgewählt und gegebenenfalls Durchführungsparameter zur Durchführung des Tasks im Ziel-Computersystem durch das Key-Computersystem festgelegt werden.

3. Verfahren nach Anspruch 2, wobei die vorbestimmten Informationen der Anfrage-Datei zumindest
- solche von wenigstens einem aus der Gruppe der Bearbeitungs-Computersysteme als Anweisungsgeber und/oder
- solche des Ziel-Computersystems als Anweisungsempfänger und/oder
- eine digitale Signatur und/oder
- eine Anweisung zur Durchführung eines Tasks und/oder
- vertrauliche Daten umfassen.

4. Verfahren nach Anspruch 2 oder 3, wobei ein jedes aus der Gruppe der Bearbeitungs-Computersysteme vorbestimmte, für dieses Verfahren verwendete Netzwerk-Ports derart geschlossen hält, dass kein Verbindungsaufbau zu dem jeweiligen Bearbeitungs-Computersystem von außen zugelassen wird und somit ein Zugriff über ein Netzwerk vermittels dieser Netzwerk-Ports verhindert wird,
wobei jedoch ein jedes aus der Gruppe der Bearbeitungs-Computersysteme eine Verbindung zu einem Vermittlungs-Computersystem aufbauen kann, um eine Task-Datei oder eine Anfrage-Datei in dem Vermittlungs-Computersystem abzulegen oder von dort abzuholen.

5. Verfahren nach einem der Ansprüche 2 bis 4, wobei die Routing-Informationen wenigstens eines aus der Gruppe der Bearbeitungs-Computersysteme innerhalb der Computernetz-Infrastruktur als zwingend einzubindendes Computersystem definieren und das Verfahren zusätzlich die folgenden Schritte umfasst:
- Übertragen der Task-Datei von wenigstens einem aus der Gruppe der Vermittlungs-Computersysteme auf wenigstens eines aus der Gruppe der Bearbeitungs-Computersysteme,
- Durchführen wenigstens einer Aktion im Bearbeitungs-Computersystem,
- Übertragen der Task-Datei vom Bearbeitungs-Computersystem zurück auf das Vermittlungs-Computersystem.

6. Verfahren nach Anspruch 5, wobei die wenigstens eine Aktion zumindest umfasst:
- Einfügen weiterer Daten in die Task-Datei und/oder
- Signieren der Task-Datei mit wenigstens einem privaten Schlüssel und/oder
- Verschlüsseln der Task-Datei mit einem öffentlichen Schlüssel des Ziel-Computersystems.

7. Verfahren nach Anspruch 6, wobei das Verfahren in mehreren Zyklen rekursiv zwischen der Gruppe der Vermittlungs-Computersysteme und der Gruppe der Bearbeitungs-Computersysteme durchgeführt wird und die Task-Datei als rekursiv angelegte Archiv-Datei eingerichtet ist, welche zumindest folgendes enthält:
- eine oder mehrere Arbeitsdateien,
- eine innere Archiv-Datei, sowie
- eine Signatur eines Bearbeitungs-Computersystems oder des Key-Computersystems aus einem vorangegangenen Zyklus, wobei in jedem Zyklus in einem jeweiligen Bearbeitungs-Computersystem die folgenden Teilschritte durchgeführt werden:
- Entpacken der als Archiv-Datei eingerichteten Task-Datei,
- Bearbeiten der einen oder mehreren entpackten Arbeitsdateien,
- Einpacken zumindest der inneren Archiv-Datei sowie der Signatur aus dem vorangegangenen Zyklus in eine zweite innere Archiv-Datei,
- Erstellen einer neuen Signatur des in diesem Zyklus beteiligten Bearbeitungs-Computersystems, sowie
- Einpacken der zweiten inneren Archiv-Datei, der bearbeiteten einen oder mehreren Arbeitsdateien und der neu erstellten Signatur in eine neue als Archiv-Datei eingerichtete Task-Datei.

8. Verfahren nach einem der Ansprüche 5 bis 7, wobei innerhalb eines Bearbeitungs-Computersystems mehrere Sicherheitsinstanzen eingerichtet sind, wobei zumindest die Entgegennahme der Task-Datei vom Vermittlungs-Computersystem, das Durchführen wenigstens einer Aktion anhand der Task-Datei, sowie das Übertragen der Task-Datei vom Bearbeitungs-Computersystem zurück auf das Vermittlungs-Computersystem in voneinander getrennten Prozessen durch unterschiedliche Sicherheitsinstanzen durchgeführt werden, und
wobei eine Sicherheitsinstanz eines Prozesses keine Verbindung zu einer Sicherheitsinstanz eines anderen Prozesses aufbauen kann, sodass ein Zugriff auf die Sicherheitsinstanz des anderen Prozesses verhindert wird, wobei jedoch ein nachgelagerter Prozess über einen Event-Mechanismus ausgelöst wird, so dass eine Sicherheitsinstanz des nachgelagerten Prozesses die Task-Datei oder Daten der Task-Datei weiterverarbeiten kann.

9. Verfahren nach einem der Ansprüche 1 bis 8, wobei das Übertragen der Task-Datei von einem aus der Gruppe der Vermittlungs-Computersysteme auf das Ziel-Computersystem oder auf eines aus der Gruppe der Bearbeitungs-Computersysteme die folgenden Schritte umfasst:
- Senden einer vorbestimmten Sequenz an Paket-Daten vom Vermittlungs-Computersystem an das Ziel-Computersystem oder das Bearbeitungs-Computersystem, wobei die vorbestimmten Netzwerk-Ports des Ziel-Computersystems oder des Bearbeitungs-Computersystems geschlossen sind und wobei die Sequenz in einer vorbestimmten Reihenfolge einen oder mehrere Netzwerk-Ports des Ziel-Computersystems oder des Bearbeitungs-Computersystems anspricht,
- Überprüfen der gesendeten Sequenz auf Übereinstimmung mit einer vordefinierten Sequenz im Ziel-Computersystem oder im Bearbeitungs-Computersystem, sowie
- Veranlassen des Übertragens der Task-Datei durch das Ziel-Computersystem oder das Bearbeitungs-Computersystem, falls die Überprüfung der gesendeten Sequenz positiv ist, wobei das Ziel-Computersystem bzw. das Bearbeitungs-Computersystem seinerseits eine Verbindung zum Vermittlungs-Computersystem aufbaut und die Task-Datei abholt.

10. Verfahren nach einem der Ansprüche 1 bis 9, wobei der Kommunikationspfad eine Mehrzahl von Teilpfaden aufweist und die Task-Datei von einem Vermittlungs-Computersystem entlang der Mehrzahl von Teilpfaden an eine Mehrzahl von im Kommunikationspfad nachfolgenden Computersystemen übertragen wird.

11. Verfahren nach einem der Ansprüche 1 bis 10, wobei die Task-Datei in wenigstens einem entlang des Kommunikationspfades beteiligten Computersystem mit einer innerhalb der Computernetz-Infrastruktur eindeutigen Kennung versehen wird oder eine bereits bestehende Kennung der Task-Datei ergänzt wird.

12. Computernetz-Infrastruktur zumindest umfassend:
- ein Key-Computersystem,
- ein Ziel-Computersystem und
- ein Vermittlungs-Computersystem,
wobei das Key-Computersystem eingerichtet ist, aus im Key-Computersystem hinterlegten, vordefinierten Routing-Informationen, die ein Routing zu einem oder mehreren zwingend einzubindenden Computersystemen entlang eines Kommunikationspfades, in einem Netzwerk der Computernetz-Infrastruktur, zwischen dem Key-Computersystem, dem Vermittlungs-Computersystem und dem Ziel-Computersystem innerhalb der Computernetz-Infrastruktur definieren, eine Task-Datei zu erzeugen und anschließend die Task-Datei vermittels des Vermittlungs-Computersystems an das Ziel-Computersystem zu übertragen, und wobei das Ziel-Computersystem eingerichtet ist, eine vermittels des Vermittlungs-Computersystems an das Ziel-Computersystem übertragene Task-Datei auf ihre Gültigkeit zu überprüfen und gegebenenfalls wenigstens einen Task im Ziel-Computersystem anhand der Task-Datei auszuführen,
wobei das Ziel-Computersystem und das Key-Computersystem jeweils eine Zugriffssteuereinheit aufweisen, die eingerichtet ist, vorbestimmte, für dieses Verfahren verwendete Netzwerk-Ports derart geschlossen zu halten, dass über das Netzwerk der Computernetz-Infrastruktur kein Verbindungsaufbau zum Key-Computersystem oder zum Ziel-Computersystem von außen zugelassen wird und somit ein Zugriff auf das Key-Computersystem oder das Ziel-Computersystem über das Netzwerk der Computernetz-Infrastruktur vermittels dieser Netzwerk-Ports verhindert ist, jedoch ein Verbindungsaufbau vom Key-Computersystem bzw. vom Ziel-Computersystem zum Vermittlungs-Computersystem zugelassen wird, um die Task-Datei in dem Vermittlungs-Computersystem abzulegen oder von dort abzuholen.

13. Computernetz-Infrastruktur nach Anspruch 12, ferner umfassend ein Bearbeitungs-Computersystem,
wobei das Bearbeitungs-Computersystem eingerichtet ist, eine Anfrage-Datei zur Durchführung eines Tasks auf dem Ziel-Computersystem vermittels des Vermittlungs-Computersystems an das Key-Computersystem zu senden,
wobei das Key-Computersystem eingerichtet ist, vorbestimmte Informationen der Anfrage-Datei zur Durchführung des Tasks im Ziel-Computersystem in der Task-Datei zu hinterlegen, und wobei das Bearbeitungs-Computersystem eine Zugriffssteuereinheit aufweist, die eingerichtet ist, vorbestimmte, für dieses Verfahren verwendete Netzwerk-Ports derart geschlossen zu halten, dass kein Verbindungsaufbau zum Bearbeitungs-Computersystem von außen zugelassen wird und somit ein Zugriff über ein Netzwerk vermittels dieser Netzwerk-Ports verhindert ist,
jedoch ein Verbindungsaufbau vom Bearbeitungs-Computersystem zum Vermittlungs-Computersystem zugelassen wird, um eine Task-Datei oder eine Anfrage-Datei in dem Vermittlungs-Computersystem abzulegen oder von dort abzuholen.

14. Computernetz-Infrastruktur nach Anspruch 12 oder 13, welche eingerichtet ist, ein Verfahren nach einem der Ansprüche 1 bis 11 durchzuführen.

15. Computerprogramm-Produkt, welches eingerichtet ist, auf einem oder mehreren Computersystemen ausgeführt zu werden und welches bei Ausführung ein Verfahren nach einem der Ansprüche 1 bis 11 durchführt.

## Claims

1. A routing method for routing task instructions between secured computer systems in a computer network infrastructure, comprising the steps of:
- invoking routing information stored in a key computer system, the routing information defining at least one routing to one or more computer systems to be mandatorily included along a communication path, in a network of the computer network infrastructure, between the key computer system, a group of one or more broker computer systems, and a target computer system within the computer network infrastructure,
- creating a task file in the key computer system, the task file comprising at least the routing information and a task description of at least one task for the target computer system,
- transmitting the task file based on the routing information along the communication path from the key computer system to the target computer system by means of the group of broker computer systems,
- checking the validity of the task file by the target computer system,
- executing at least one task in the target computer system based on the task file if the checking of the validity of the task file was successful,
wherein both the key computer system and the target computer system keep predetermined network ports used for this method closed in such a way that no connection establishment to the key computer system or to the target computer system from the outside is permitted via the network of the computer network infrastructure and thus access to the key computer system or the target computer system via the network of the computer network infrastructure by means of these network ports is prevented,
but wherein the key computer system and the target computer system each establish a connection to a broker computer system from the group of broker computer systems for storing the task file in or retrieving the task file from the broker computer system.

2. The method of claim 1, further comprising the steps of:
- Transferring a request file from one of a group of one or more processing broker computer systems to one of the group of broker computer systems, the request file containing predetermined information for performing a task on the target computer system,
- transferring the request file from the broker computer system to the key computer system, wherein the key computer system establishes a connection to the broker computer system to retrieve the request file from the broker computer system,
- generating the task description by the key computer system, wherein based on the predetermined information of the request file, a predetermined basic functionality of a task is selected by the key computer system and, if necessary, execution parameters for executing the task in the target computer system are determined by the key computer system.

3. The method of claim 2, wherein the predetermined information of the request file is at least one of
- those of at least one of the group of processing computer systems as instruction giver and/or
- those of the target computer system as instruction recipient and/or
- a digital signature and/or
- an instruction to perform a task and/or
- confidential data.

4. The method according to claim 2 or 3, wherein each of the group of processing computer systems keeps predetermined network ports used for this method closed in such a way that no connection establishment to the respective processing computer system from the outside is permitted and thus access via a network by means of these network ports is prevented, wherein, however, each of the group of processing computer systems can establish a connection to a broker computer system in order to store a task file or a request file in the broker computer system or to retrieve it therefrom.

5. The method according to any one of claims 2 to 4, wherein the routing information defines at least one of the group of processing computer systems within the computer network infrastructure as a computer system to be mandatorily included, and the method additionally comprises the steps of:
- Transferring the task file from at least one of the group of broker computer systems to at least one of the group of processing computer systems,
- performing at least one action in the processing computer system,
- transferring the task file from the processing computer system back to the broker computer system.

6. The method of claim 5, wherein the at least one action comprises at least:
- Inserting further data into the task file and/or
- signing the task file with at least one private key and/or
- encrypting the task file with a public key of the target computer system.

7. The method of claim 6, wherein the method is performed recursively in a plurality of cycles between the set of broker computer systems and the set of processing computer systems, and the task file is set up as a recursively created archive file containing at least:
- one or more work files,
- an inner archive file, and
- a signature of a processing computer system or of the key computer system from a preceding cycle, wherein in each cycle the following sub-steps are carried out in a respective processing computer system:
- Unpacking the task file set up as an archive file,
- Processing the one or more unpacked work files,
- Packing at least the inner archive file and the signature from the previous cycle into a second inner archive file,
- creating a new signature of the processing computer system involved in this cycle, and
- packing the second inner archive file, the processed one or more work files and the newly created signature into a new task file set up as an archive file.

8. The method according to any one of claims 5 to 7, wherein a plurality of security instances are set up within a processing computer system, wherein at least the receiving of the task file from the broker computer system, the performing of at least one action on the basis of the task file, and the transferring of the task file from the processing computer system back to the broker computer system are performed in processes separate from one another by different security instances, and
wherein a security instance of one process cannot establish a connection to a security instance of another process, so that access to the security instance of the other process is prevented,
but wherein a downstream process is triggered via an event mechanism so that a security instance of the downstream process can further process the task file or data of the task file.

9. The method of any one of claims 1 to 8, wherein transferring the task file from one of the group of broker computer systems to the target computer system or to one of the group of processing computer systems comprises the steps of:
- Sending a predetermined sequence of packet data from the broker computer system to the target computer system or the processing computer system, wherein the predetermined network ports of the target computer system or the processing computer system are closed and wherein the sequence addresses one or more network ports of the target computer system or the processing computer system in a predetermined order,
- checking the transmitted sequence for correspondence with a predefined sequence in the target computer system or the processing computer system, and
- causing transmission of the task file by the target computer system or the processing computer system if the check of the transmitted sequence is positive, wherein the target computer system or the processing computer system in turn establishes a connection to the broker computer system and fetches the task file.

10. The method of any one of claims 1 to 9, wherein the communication path comprises a plurality of sub-paths and the task file is transmitted from a broker computer system along the plurality of sub-paths to a plurality of downstream computer systems in the communication path.

11. The method of any one of claims 1 to 10, wherein the task file in at least one computer system involved along the communication path is provided with an identifier unique within the computer network infrastructure or an already existing identifier of the task file is supplemented.

12. Computer network infrastructure comprising at least:
- a key computer system,
- a target computer system, and
- a broker computer system,
wherein the key computer system is set up from predefined routing information stored in the key computer system, which defines a routing to one or more computer systems that must be included along a communication path, in a network of the computer network infrastructure, between the key computer system, the broker computer system and the target computer system within the computer network infrastructure, to define a task file and subsequently to transmit the task file to the target computer system by means of the broker computer system, and
wherein the target computer system is arranged to check a task file transmitted to the target computer system by means of the broker computer system for its validity and, if necessary, to execute at least one task in the target computer system on the basis of the task file,
wherein the target computer system and the key computer system each have an access control unit which is set up to keep predetermined network ports used for this method closed in such a way that no connection establishment to the key computer system or to the target computer system from outside is permitted via the network of the computer network infrastructure and thus access to the key computer system or the target computer system via the network of the computer network infrastructure by means of these network ports is prevented, but a connection establishment from the key computer system or from the target computer system to the broker computer system is permitted to store the task file in or retrieve the task file from the broker computer system.

13. The computer network infrastructure of claim 12, further comprising a processing computer system,
wherein the processing computer system is arranged to send a request file for performing a task on the target computer system to the key computer system via the broker computer system,
wherein the key computer system is arranged to store in the task file predetermined information of the request file for performing the task in the target computer system, and wherein the processing computer system has an access control unit which is arranged to keep predetermined network ports used for this method closed in such a way that no connection establishment to the processing computer system from the outside is permitted and thus access via a network by means of these network ports is prevented,
but a connection establishment from the processing computer system to the broker computer system is allowed for the purpose of storing or retrieving a task file or a request file in or from the broker computer system.

14. Computer network infrastructure according to claim 12 or 13, which is arranged to perform a method according to any one of claims 1 to 11.

15. A computer program product which is arranged to be executed on one or more computer systems and which, when executed, performs a method according to any one of claims 1 to 11.

## Revendications

1. Procédé de routage pour acheminer des instructions de tâches entre des systèmes informatiques sécurisés dans une infrastructure de réseau informatique, comprenant les étapes suivantes
- Invoquer les informations de routage stockées dans un système informatique clé, les informations de routage définissant au moins un routage vers un ou plusieurs systèmes informatiques à inclure obligatoirement le long d'une voie de communication, dans un réseau de l'infrastructure du réseau informatique, entre le système informatique clé, un groupe d'un ou plusieurs systèmes informatiques de commutation, et un système informatique cible au sein de l'infrastructure du réseau informatique,
- la création d'un fichier de tâches dans le système informatique clé, le fichier de tâches comprenant au moins les informations de routage et une description d'au moins une tâche pour le système informatique cible,
- la transmission du fichier de tâches basé sur les informations de routage le long de la voie de communication entre le système informatique clé et le système informatique cible au moyen du groupe de systèmes informatiques de commutation,
- la vérification de la validité du fichier de tâches par le système informatique cible,
- l'exécution d'au moins une tâche dans le système informatique cible sur la base du fichier de tâches si la vérification de la validité du fichier de tâches a été effectuée avec succès,
dans lequel tant le système informatique clé que le système informatique cible maintiennent fermés des ports de réseau prédéterminés utilisés pour cette méthode, de telle sorte qu'aucun établissement de connexion au système informatique clé ou au système informatique cible depuis l'extérieur n'est autorisé via le réseau de l'infrastructure de réseau informatique et qu'ainsi l'accès au système informatique clé ou au système informatique cible via le réseau de l'infrastructure de réseau informatique au moyen de ces ports de réseau est empêché,
mais dans lequel le système informatique clé et le système informatique cible établissent chacun une connexion à un système informatique de commutation du groupe de systèmes informatiques de commutation pour stocker le fichier de tâche dans le système informatique de commutation ou pour récupérer le fichier de tâche à partir de celui-ci.

2. Le procédé selon la revendication 1, comprenant en outre les étapes suivantes
- Transfert d'un fichier de demande d'un groupe d'un ou plusieurs systèmes informatiques de traitement vers un du groupe de systèmes informatiques de commutation, le fichier de demande contenant des informations prédéterminées pour l'exécution d'une tâche sur le système informatique cible,
- le transfert du fichier de demande du système informatique de commutation au système informatique clé, dans lequel le système informatique clé établit une connexion avec le système informatique de commutation pour récupérer le fichier de demande du système informatique de commutation,
- la génération de la description de la tâche par le système informatique clé, dans laquelle, sur la base des informations prédéterminées du fichier de demande, une fonctionnalité de base prédéterminée d'une tâche est sélectionnée par le système informatique clé et, si nécessaire, des paramètres d'exécution pour l'exécution de la tâche dans le système informatique cible sont déterminés par le système informatique clé.

3. Le procédé selon la revendication 2, dans lequel les informations prédéterminées du fichier de demande sont au moins l'une des suivantes
- ceux d'au moins un des systèmes informatiques de traitement en tant que donneur d'ordre et/ou
- celles du système informatique cible en tant que destinataire de l'instruction et/ou
- une signature numérique et/ou
- une instruction d'exécuter une tâche et/ou
- des données confidentielles.

4. Le procédé selon la revendication 2 ou 3, dans lequel chacun du groupe de systèmes informatiques de traitement maintient fermés des ports de réseau prédéterminés utilisés pour ce procédé de telle sorte qu'aucun établissement de connexion au système informatique de traitement respectif depuis l'extérieur ne soit autorisé et que l'accès par un réseau au moyen de ces ports de réseau soit ainsi empêché, dans lequel, toutefois, chacun des systèmes informatiques de traitement peut établir une connexion avec un système informatique de commutation afin de stocker un fichier de tâche ou un fichier de demande dans le système informatique de commutation ou de le récupérer à partir de celui-ci.

5. Le procédé selon l'une quelconque des revendications 2 à 4, dans lequel les informations de routage définissent au moins l'un du groupe de systèmes informatiques de traitement au sein de l'infrastructure du réseau informatique comme un système informatique à inclure obligatoirement, et le procédé comprend en outre les étapes suivantes
- Transfert du fichier de tâches d'au moins un des systèmes informatiques de commutation vers au moins un des systèmes informatiques de traitement,
- effectuer au moins une action dans le système informatique de traitement,
- le transfert du fichier de tâche du système informatique de traitement en retour vers le système informatique de commutation.

6. Le procédé selon la revendication 5, dans lequel la ou les actions comprennent au moins :
- Insérer des données supplémentaires dans le fichier de tâches et/ou
- signer le fichier de tâches avec au moins une clé privée et/ou
- Cryptage du fichier de tâches avec une clé publique du système informatique cible.

7. Le procédé selon la revendication 6, dans lequel le procédé est exécuté récursivement en plusieurs cycles entre le groupe de systèmes informatiques de commutation et le groupe de systèmes informatiques de traitement, et le fichier de tâches est établi en tant que fichier d'archives créé récursivement contenant au moins :
- un ou plusieurs dossiers de travail,
- un fichier d'archivé interne, et
- une signature d'un système informatique de traitement ou du système informatique clé d'un cycle précédent, dans lequel, dans chaque cycle, les sous-étapes suivantes sont effectuées dans un système informatique de traitement respectif :
- Déballage du fichier de tâches configuré comme un fichier d'archive,
- le traitement d'un ou de plusieurs fichiers de travail déballés,
- Emballer au moins le fichier d'archivé interne et la signature du cycle précédent dans un deuxième fichier d'archivé interne,
- la création d'une nouvelle signature du système informatique de traitement impliqué dans ce cycle, et
- Emballage du deuxième fichier d'archivé interne, du ou des fichiers de travail traités et de la signature nouvellement créée dans un nouveau fichier de tâches configuré comme un fichier d'archivé.

8. Le procédé selon l'une quelconque des revendications 5 à 7, dans lequel une pluralité d'instances de sécurité sont mises en place dans un système informatique de traitement, dans lequel au moins la réception du fichier de tâches du système informatique de commutation, l'exécution d'au moins une action basée sur le fichier de tâches et le transfert du fichier de tâches du système informatique de traitement en retour au système informatique de commutation sont effectués dans des processus séparés les uns des autres par différentes instances de sécurité, et
où une instance de sécurité d'un processus ne peut pas établir une connexion avec une instance de sécurité d'un autre processus, de sorte que l'accès à l'instance de sécurité de l'autre processus est empêché,
mais dans lequel un processus en aval est déclenché par un mécanisme d'événement afin qu'une instance de sécurité du processus en aval puisse traiter le fichier de tâches ou les données du fichier de tâches.

9. Le procédé selon l'une quelconque des revendications 1 à 8, dans lequel le transfert du fichier de tâches d'un du groupe des systèmes informatiques de commutation vers le système informatique cible ou vers un du groupe des systèmes informatiques de traitement comprend les étapes suivantes
- Envoi d'une séquence prédéterminée de données par paquets du système informatique de commutation vers le système informatique cible ou le système informatique de traitement, dans lequel les ports de réseau prédéterminés du système informatique cible ou du système informatique de traitement sont fermés, et dans lequel la séquence s'adresse à un ou plusieurs ports de réseau du système informatique cible ou du système informatique de traitement dans un ordre prédéterminé,
- vérification de la correspondance de la séquence transmise avec une séquence prédéfinie dans le système informatique cible ou dans le système informatique de traitement, et
- faire en sorte la transmission du fichier de tâches par le système informatique cible ou le système informatique de traitement si le contrôle de la séquence transmise est positif, le système informatique cible ou le système informatique de traitement établissant à son tour une connexion avec le système informatique de commutation et récupérant le fichier de tâches.

10. Le procédé selon l'une quelconque des revendications 1 à 9, dans lequel la voie de communication comprend une pluralité de sous-voie et le fichier de tâche est transmis d'un système informatique de commutation le long de la pluralité de sous-voie à une pluralité de systèmes informatiques en aval dans la voie de communication.

11. Le procédé de l'une quelconque des revendications 1 à 10, dans lequel le fichier de tâches est pourvu d'un identifiant unique au sein de l'infrastructure du réseau informatique dans au moins un système informatique participant le long de la voie de communication, ou un identifiant existant du fichier de tâches est complété.

12. Infrastructure de réseau informatique comprenant au moins :
- un système informatique clé,
- un système informatique cible, et
- un système informatique de commutation,
dans lequel le système informatique clé est agencé pour créer un fichier de tâches, à partir d'informations de routage prédéfinies stockées dans le système informatique clé, des informations de routage définissant un routage vers un ou plusieurs systèmes informatiques obligatoires le long d'une voie de communication, dans un réseau de l'infrastructure du réseau informatique, entre le système informatique clé, le système informatique de commutation et le système informatique cible dans l'infrastructure du réseau informatique et puis pour transmettre le fichier de tâches au système informatique cible au moyen du système informatique de commutation, et
dans lequel le système informatique cible est agencé pour vérifier la validité d'un fichier de tâches transmis au système informatique cible au moyen du système informatique de commutation et, si nécessaire, pour exécuter au moins une tâche dans le système informatique cible sur la base du fichier de tâches,
le système informatique cible et le système informatique clé disposent chacun d'une unité de contrôle d'accès qui est conçue pour maintenir fermés des ports de réseau prédéterminés utilisés pour ce procédé, de telle sorte qu'aucun établissement de connexion au système informatique clé ou au système informatique cible depuis l'extérieur n'est autorisé via le réseau de l'infrastructure de réseau informatique et qu'ainsi l'accès au système informatique clé ou au système informatique cible via le réseau de l'infrastructure de réseau informatique au moyen de ces ports de réseau est empêché, mais un établissement de connexion depuis le système informatique clé ou depuis le système informatique cible vers le système informatique de commutation est autorisé afin de stocker le fichier de tâche dans le système informatique de commutation ou pour récupérer le fichier de tâche à partir de ce dernier.

13. L'infrastructure du réseau informatique selon la revendication 12, comprenant en outre un système informatique de traitement,
dans lequel le système informatique de traitement est adapté pour envoyer un fichier de demande pour l'exécution d'une tâche sur le système informatique cible au système informatique clé via le système informatique de commutation, dans lequel le système informatique clé est adapté pour stocker des informations prédéterminées du fichier de demande pour l'exécution de la tâche dans le système informatique cible dans le fichier de tâche, et
dans lequel le système informatique de traitement dispose d'une unité de contrôle d'accès qui est agencée pour maintenir fermés des ports de réseau prédéterminés utilisés pour cette méthode, de telle sorte qu'aucun établissement de connexion au système informatique de traitement depuis l'extérieur ne soit autorisé et que l'accès par un réseau au moyen de ces ports de réseau soit ainsi empêché,
mais permettant d'établir une connexion entre le système informatique de traitement et le système informatique de commutation afin de stocker un fichier de tâche ou un fichier de demande dans le système informatique de commutation ou de le récupérer à partir de celui-ci.

14. L'infrastructure de réseau informatique selon la revendication 12 ou 13, qui est agencée pour exécuter un procédé selon l'une quelconque des revendications 1 à 11.

15. Produit de programme informatique qui est conçu pour être exécuté sur un ou plusieurs systèmes informatiques et qui, une fois exécuté, exécute un procédé selon l'une quelconque des revendications 1 à 11.
